(19) Europäisches Patentamt / European Patent Office / Office européen des brevets

(11) **EP 2 610 518 B1**

(12) **EUROPEAN PATENT SPECIFICATION**

(45) Date of publication and mention
of the grant of the patent:
**24.09.2014  Bulletin 2014/39**

(51) Int Cl.:
*F16D 48/02* *(2006.01)*

(21) Application number: **13161690.6**

(22) Date of filing: **03.08.2010**

(54) **Vehicle hydraulic clutch apparatus**

Hydraulische Kupplungsvorrichtung für Kraftfahrzeug

Dispositif hydraulique d'embrayage pour véhicule

(84) Designated Contracting States:
**DE**

(30) Priority:  **06.08.2009   JP 2009183865**

(43) Date of publication of application:
**03.07.2013   Bulletin 2013/27**

(62) Document number(s) of the earlier application(s) in
accordance with Art. 76 EPC:
**10755235.8 / 2 462 358**

(73) Proprietors:
• **Toyota Jidosha Kabushiki Kaisha**
**Toyota-shi, Aichi 471-8571 (JP)**
• **Aisin Seiki Kabushiki Kaisha**
**Kariya-shi Aichi 448-8650 (JP)**

(72) Inventors:
• **Ota, Masayoshi**
**c/o Toyota Jidosha Kabushiki Kaisha**
**Toyota-shi, Aichi 471-8571 (JP)**
• **Mizuta, Atsuhisa**
**c/o Toyota Jidosha Kabushiki Kaisha**
**Toyota-shi, Aichi 471-8571 (JP)**
• **Okano, Nobuhiko**
**c/o Toyota Jidosha Kabushiki Kaisha**
**Toyota-shi, Aichi 471-8571 (JP)**
• **Segawa, Takeo**
**c/o Toyota Jidosha Kabushiki Kaisha**
**Toyota-shi, Aichi 471-8571 (JP)**

• **Kagiyama, Junji**
**c/o Aisin Seiki Kabushiki Kaisha**
**Kariya-shi, Aichi 448-8650 (JP)**
• **Sadakari, Shuji**
**c/o Aisin Seiki Kabushiki Kaisha**
**Kariya-shi, Aichi 448-8650 (JP)**
• **Gotou, Yuuichi**
**c/o Aisin Seiki Kabushiki Kaisha**
**Kariya-shi, Aichi 448-8650 (JP)**
• **Matsuishi, Takashi**
**c/o Aisin Seiki Kabushiki Kaisha**
**Kariya-shi, Aichi 448-8650 (JP)**
• **Niwa, Hidemichi**
**c/o Aisin Seiki Engineering Co., Ltd.**
**Kariya-shi, Aichi 448-8605 (JP)**
• **Koyanagi, Makoto**
**c/o Aisin Engineering Co., Ltd.**
**Kariya-shi, Aichi 448-8605 (JP)**

(74) Representative: **Albutt, Anthony John**
**D Young & Co LLP**
**120 Holborn**
**London EC1N 2DY (GB)**

(56) References cited:
**EP-A2- 0 937 903      EP-A2- 2 039 942**
**EP-A2- 2 184 505      DE-A1-102008 058 674**
**DE-U1- 8 429 669      US-A1- 2005 081 709**

**Description**

BACKGROUND OF THE INVENTION

1. Field of the Invention

The invention relates to a vehicle hydraulic clutch apparatus for transmitting motive power of a drive force source to a driving wheel and cutting off the transmission of motive power and, particularly, to a technology that improves the operability of the vehicle hydraulic clutch apparatus.

2. Description of the Related Art

A vehicle is equipped with a vehicle hydraulic clutch apparatus for selectively transmitting motive power generated by a drive force source to driving wheels and cutting off the transmission of motive power thereto. The vehicle hydraulic clutch apparatus uses oil pressure as a drive source. For example, when a clutch pedal is depressed by a driver of the vehicle, oil pressure is accordingly generated, and a friction clutch is actuated through the use of the generated oil pressure as a drive source so as to cut off the transmission of motive power.

The friction clutch and the clutch pedal are operatively interconnected via an oil passageway, and are equipped with a clutch master cylinder for generating a predetermined oil pressure. For example, when the clutch pedal is not depressed, the oil passageway and a reservoir tank for charging a working oil (fluid) into the oil passageway are in communication with each other via a port that is formed in the clutch master cylinder, so that the oil passageway is charged with the working oil as appropriate. Incidentally, the then-occurring oil pressure of the working oil is substantially equal to the atmospheric pressure due to the communication with the reservoir tank. At this time, the engaged state of the friction clutch is maintained since an actuator for releasing the friction clutch is not supplied with a predetermined oil pressure. On the other hand, when a driver depresses the clutch pedal, a piston provided within the clutch master cylinder is moved so that the communication between the oil passageway and the reservoir tank is cut off. Therefore, as the piston moves, the working oil is pressurized to increase its pressure. Then, the increased oil pressure of the working oil is supplied to a pressure chamber provided in the actuator, via the oil passageway (piping), so that a piston of the actuator is moved to mechanically release a friction clutch.

In a main-stream vehicle hydraulic clutch apparatus, the friction clutch is released indirectly via a release fork when a clutch release cylinder (i.e., the foregoing actuator) that is hydraulically actuated is driven. However, there has been realized a type of clutch apparatus called concentric slave cylinder in which the friction clutch is released by directly driving the piston of the slave cylinder without using a release fork. Examples of such a hydraulic clutch apparatus are described in, for example, Japanese Patent Application Publication No. 2008-190718 (JP-A-2008-190718) and Japanese Patent Application Publication No. 2009-30710 (JP-A-2009-30710).

By the way, in concentric slave cylinders as described in Japanese Patent Application Publication No. 2008-190718 (JP-A-2008-190718), Japanese Patent Application Publication No. 2009-30710 (JP-A-2009-30710), etc., predetermined gaps are provided in the axis direction, the rotation direction, the radial directions, in order to absorb vibration from the engine. Such gaps are provided, for example, between a sliding cup and a piston, between a piston and a bearing, between divided pistons of the concentric slave cylinder, etc. At the time of ordinary depression of the clutch pedal, the working oil in the oil passageway comes to have positive pressure. However, if the clutch pedal is quickly returned to the home position from the depressed position after the clutch pedal has been depressed, the port of the clutch master cylinder is linked to the reservoir tank so that communication therebetween is brought about. Therefore, the working oil swiftly flows from the concentric slave cylinder side to the clutch master cylinder side. Due to the influence of the inertia of the working oil, negative pressure occurs in the oil passageway, whereby the foregoing gap becomes large. In association with this, the play of the initial stroke of the clutch pedal (ineffective stroke) increases, giving rise to a possibility of a clutch pedal disengagement failure, deterioration of a clutch feeling, deterioration of the returning of the pedal, or the like the next time the clutch pedal is depressed, and therefore giving rise to a possibility of deterioration of the operability of the clutch apparatus. Other background art is DE 10 2008 058674 which relates to a hydraulic valve e.g. a peak torque limiter, for a motor vehicle, which has openings for enabling flow through valve and arranged in a valve housing that is provided for housing fixed mounting within a through hole.

Aspects of the invention are defmed in the appended claims.

The present disclosure provides a vehicle hydraulic clutch apparatus capable of restraining the occurrence of negative pressure in a concentric slave cylinder so that operability can be heightened.

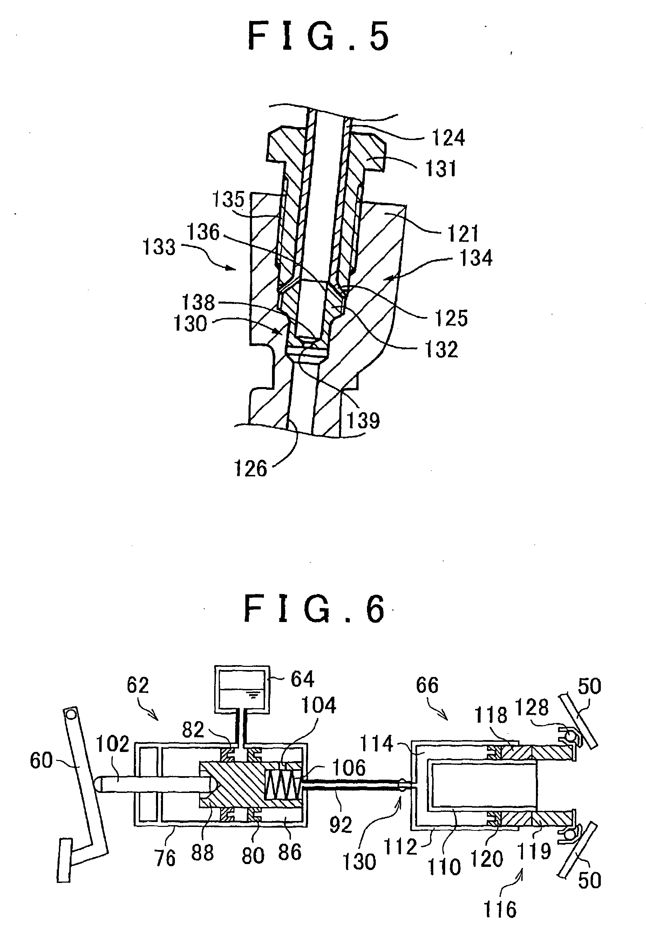

In conjunction with this task, the present inventors have found that if a flow restraint device, such as an orifice or the like, is provided in an oil passageway, the inertial energy of the working oil occurring in the case where the working oil flows from the slave cylinder side to the clutch master cylinder side is reduced, and therefore the negative pressure that occurs in the oil passageway in that case is restrained. Furthermore, the present inventors have also found that by providing the flow restraint device in a concentric slave cylinder, the inertial energy of the working oil can be most effectively reduced, and therefore the occurrence of negative pressure can be effectively restrained. Incidentally, Japanese Patent Application Publication No. 2008-190718 (JP-A-2008-190718) describes a supply orifice (13) provided in a concentric slave cylinder. However, as shown in FIG. 6 in the publication, when a supply pipe (11) and a bore (14) are connected, the passage cross-sectional area is not reduced by the orifice (13), and the supply orifice (13) does not perform the essential function of the orifice (flow restraining function).

A first aspect of the disclosure relates to a vehicle hydraulic clutch apparatus. This hydraulic clutch apparatus: (a) is a vehicle hydraulic clutch apparatus including: a clutch master cylinder which is connected to a reservoir tank that stores an working oil and which generates clutch working oil pressure in response to operation of a clutch pedal; and a concentric slave cylinder that engages and releases a friction clutch as clutch working oil pressure generated by the clutch master cylinder is supplied to and discharged from the concentric slave cylinder via an oil passageway; and (b) includes a flow restraint device that restrains flow of the working oil from a concentric slave cylinder side to a clutch master cylinder side which occurs according to operation of the clutch pedal is provided in the concentric slave cylinder.

According to an example of the foregoing hydraulic clutch apparatus, the flow restraint device that restrains the flow of the working oil from the concentric slave cylinder side to the clutch master cylinder side which occurs in conjunction with operation of the clutch pedal is provided in the concentric slave cylinder. Therefore, if a pedal return operation of quickly releasing depression of the clutch pedal from a depressed state is performed, the working oil flows from the concentric slave cylinder side to the clutch master cylinder side. Then, due to influence of the inertia of the working oil, negative pressure is likely to occur in the oil passageway. However, due to the provision of the flow restraint device, the inertial energy of the working oil is reduced, so that the occurrence of negative pressure is restrained. Therefore, since the increase of the gap formed in the concentric slave cylinder in association with occurrence of negative pressure is restrained, the increase in the ineffective stroke resulting from the gap at the next performance of depressing the clutch pedal can be reduced. Therefore, the operability of the clutch pedal can be heightened.

Besides, since the flow restraint device is provided in the concentric slave cylinder, the amount of reduction of the inertial energy achieved by the flow restraint device becomes larger than in the case where the flow restraint device is provided in the clutch master cylinder side, so that the occurrence of negative pressure is effectively restrained. Therefore, the increase of the gap in the concentric slave cylinder is effectively restrained.

Besides, in an example of the foregoing hydraulic clutch apparatus, the flow restraint device may be a throttle hole that increases flow resistance of the working oil in the oil passageway, and the throttle hole may be formed so that flow resistance occurring when the working oil flows from the concentric slave cylinder side to the clutch master cylinder side is greater than the flow resistance occurring when the working oil flows from the clutch master cylinder side to the concentric slave cylinder side.

According to an example of the foregoing hydraulic clutch apparatus, since the throttle hole is formed as described above, the flow resistance of the working oil is relatively large and the pressure loss of the working oil is relatively large in the case where the working oil flows from the concentric slave cylinder side to the clutch master cylinder side. On the other hand, in the case where the working oil flows from the clutch master cylinder side to the concentric slave cylinder side, the flow resistance of the working oil is relatively small and the pressure loss thereof is relatively small. Therefore, since the pressure loss can be changed according to the flowing direction of the working oil, it is possible to restrain the pressure loss and secure a sufficient amount of flow of the working oil when the clutch pedal is depressed, and it is also possible to increase the pressure loss and therefore reduce the inertial energy of the working oil so that the occurrence of negative pressure can be restrained, when a pedal return operation of releasing depression of the clutch pedal is performed.

In an example of the foregoing hydraulic clutch apparatus, the throttle hole may be formed in a taper shape such that an cross-sectional area of the oil passageway sharply reduces in a direction from the concentric slave cylinder side to the clutch master cylinder side, and such that the cross-sectional area of the oil passageway gradually decreases in a direction from the clutch master cylinder side to the concentric slave cylinder side.

According to an example of the foregoing hydraulic clutch apparatus, due to the foregoing configuration of the throttle hole, when the working oil flows from the concentric slave cylinder side to the clutch master cylinder side, the working oil flows through the throttle hole that sharply reduces in the cross-sectional area, so that the flow of the working oil is disturbed and therefore the pressure loss increases. Besides, when the working oil flows from the clutch master cylinder side to the concentric slave cylinder side, the working oil flows through the throttle hole along the tapered oil passageway wall without being disturbed, so that pressure loss is restrained. Therefore, the foregoing construction changes the pressure loss according to the moving direction of the working oil.

In an example of a hydraulic clutch apparatus, the throttle hole may have a minimum sectional area portion whose cross-sectional area is minimum, and may have a taper shape such that cross-sectional area of the oil passageway decreases from the clutch master cylinder side toward the minimum cross-sectional area portion, and may also have a shape such that the cross-sectional area of the oil passageway decreases from the concentric slave cylinder side to the minimum cross-sectional area portion more sharply than the cross-sectional area of the oil passageway that has the taper shape.

In the hydraulic clutch apparatus of the invention, the flow restraint device is be a valve mechanism in which a valve is moved so that a cross-sectional area of the oil passageway becomes smaller when the working oil moves from the concentric slave cylinder side to the clutch master cylinder side than when the working oil moves from the clutch master cylinder side to the concentric slave cylinder side.

Furthermore according to the invention, the valve is made of an elastic member in which the cross-sectional area becomes smaller when the working oil moves from the concentric slave cylinder side to the clutch master cylinder side than when the working oil moves from the clutch master cylinder side to the concentric slave cylinder side.

The elastic member has a conical shape, and a penetration hole concentric with an axis of the elastic member is formed in the elastic member.

In an example of the hydraulic clutch apparatus, the valve mechanism may open the valve when the working oil moves from the clutch master cylinder side to the concentric slave cylinder side, and may close the valve when the working oil moves from the concentric slave cylinder side to the clutch master cylinder side and negative pressure occurs.

According to an example of the hydraulic clutch apparatus, the flow restraint device is a valve mechanism that opens the valve when the working oil moves from the clutch master cylinder side to the concentric slave cylinder side, and that closes when the working oil moves from the concentric slave cylinder side to the clutch master cylinder side and negative pressure occurs. Therefore, the occurrence of negative pressure can be effectively restrained.

In an example of the hydraulic clutch apparatus, (a) the concentric slave cylinder includes: (b) a cylindrical inner sleeve fixed to a non-rotary member; (c) a cylindrical outer sleeve that is fixed at an outer periphery side of the inner sleeve and coaxially with the inner sleeve; (d) an annular pressure chamber that is formed between the inner sleeve and the outer sleeve and that receives the clutch working oil pressure from the clutch master cylinder; (e) an annular output piston that is slidably fitted in a gap between the inner sleeve and the outer sleeve, and that receives the clutch working oil pressure supplied to the pressure chamber and transmits clutch operating force to the friction clutch; and (f) a slidable cup that is interposed between the pressure chamber and the output piston and that liquid-tightly maintains the pressure chamber, and (g) the output piston includes a first piston and a second piston that are separable from each other in a direction of an axis. In the hydraulic clutch apparatus, the output piston may consist of the first piston and the second piston.

Besides, according to an example of the hydraulic clutch apparatus, the output piston of the slave cylinder is made up of the first piston and the second piston and the two pistons are separable from each other in the direction of the axis. Therefore, as a gap is formed between the first piston and the second piston, the vibration transmitted from the engine can be absorbed by the gap. Besides, when negative pressure occurs in the oil passageway due to performance of the quick pedal return operation of quickly releasing a depressed state of the clutch pedal, the piston which is close to the pressure chamber of the concentric slave cylinder is drawn to the pressure chamber side by the negative pressure, so that the foregoing gap becomes large. Therefore, the next time the clutch pedal is depressed, the ineffective stroke resulting from the increased gap becomes large, and therefore the operability of the clutch device declines. However, due to the provision of the orifice, the occurrence of the negative pressure is restrained, and the increase of the gap is restrained.

In an example of the hydraulic clutch apparatus, the flow restraint device may be provided in a connecting portion that connects an opening portion of the oil passageway that communicates with a pressure chamber formed in the concentric slave cylinder and a piping that constitutes the oil passageway that communicates with the clutch master cylinder.

Besides, according to an example of the hydraulic clutch apparatus, since the flow restraint device is provided in the connecting portion between the opening portion of the oil passageway that communicates with the pressure chamber that is formed in the concentric slave cylinder and the piping that constitutes the oil passageway that communicates with the master cylinder, the pressure loss is larger than in a construction in which the flow restraint device is provided at the clutch master cylinder side. Therefore, the amount of reduction in the inertial energy of the working oil increases, and the occurrence of negative pressure is effectively restrained. Besides, the provision of the connecting portion makes it easy to dispose the flow restraint device.

In an example of the foregoing hydraulic clutch apparatus, the flow restraint device may be formed integrally with a cylindrical seat member that is inserted in the connecting portion between the concentric slave cylinder and the piping.

According to an example of the hydraulic clutch apparatus, since the flow restraint device is formed integrally with the cylindrical seat member that is inserted in the connecting portion between the concentric slave cylinder and the piping, the flow restraint device can be constructed merely by deforming the seat member. Therefore, it is possible to easily provide the flow restraint device without increasing the number of component parts.

BRIEF DESCRIPTION OF THE DRAWINGS

The features, advantages, and technical and industrial significance of this invention will be described in the following detailed description of example embodiments of the invention with reference to the accompanying drawings, in which like numerals denote like elements, and wherein:

FIG. 1 is a sectional view showing a friction clutch and its peripheral members that are provided in a vehicle equipped with a vehicle hydraulic clutch apparatus in accordance with Embodiment 1 of the invention;

FIG. 2 is a diagram showing a portion of the vehicle hydraulic clutch apparatus that is provided for actuating the friction clutch shown in FIG. 1;

FIG. 3 is a sectional view showing a clutch master cylinder shown in FIG. 2;

FIG. 4 is a sectional view showing a concentric clutch cylinder shown in FIG. 1;

FIG. 5 is an enlarged partial sectional view showing a state in which an end portion of piping is connected to an extended portion of an outer sleeve that constitutes the concentric slave cylinder shown in FIG. 4;

FIG. 6 is a diagram illustrating an actuation of the vehicle hydraulic clutch apparatus that is provided with an orifice shown in FIG. 5;

FIG. 7 is another diagram illustrating the actuation of the vehicle hydraulic clutch apparatus that is provided with the orifice shown in FIG. 5;

FIG. 8 is still another diagram illustrating the actuation of the vehicle hydraulic clutch apparatus that is provided with orifice shown in FIG. 5;

FIG. 9 is a diagram illustrating an actuation of a vehicle hydraulic clutch apparatus that is not provided with the orifice shown in FIG. 5;

FIG. 10 is a diagram showing examples of experiment data showing relations between the pedal depression force and the pedal stroke of the clutch pedal in a clutch apparatus that is not provided with the orifice shown in FIG. 5, when the clutch pedal is depressed after the clutch pedal has been returned relatively slowly or after the clutch pedal has been returned relatively quickly;

FIG. 11 is a time chart showing changes in the hydraulic pressure (oil pressure) in the pressure chamber of the clutch master cylinder and changes in the hydraulic pressure (oil pressure) in the pressure chamber of the concentric slave cylinder during a depressing operation of the clutch pedal and the operation of returning the clutch pedal from the depressed state;

FIG. 12 is a diagram showing of an overall construction of a vehicle hydraulic clutch apparatus;

FIG. 13 is a diagram relations between the pedal returning speed and the increase in the pedal backlash in the cases where the orifice is provided at one of various positions (A, B and C) in the oil passageway shown in FIG. 12 and in the case (D) where the orifice is not provided;

FIG. 14 is a diagram showing relations between the ambient temperature and the clutch pedal return time in the cases where the orifice is provided at one of various positions (A, B and C) in the oil passageway shown in FIG. 12, and in the case (D) where the orifice is not provided;

FIG. 15 is a table showing tendencies (results) that are found from the diagrams of FIGS. 13 and 14;

FIG. 16 is a sectional view showing a one-way throttle valve as a flow restraint device provided in Embodiment 2 of the invention;

FIG. 17 is another sectional view showing the one-way throttle valve as a flow restraint device provided in Embodiment 2 of the invention; and

FIG. 18 is a diagram showing changes in the oil pressure of the working oil in a slave cylinder when the clutch pedal is quickly returned from a depressed state in the case where the one-way throttle valve shown in FIGS. 16 and 17 is provided and in the case where the one-way throttle valve is not provided.

DETAILED DESCRIPTION OF EMBODIMENTS

Embodiments of the invention will be described in detail below with reference to the drawings. Incidentally, the drawings regarding the following embodiments are simplified or modified as appropriate, and the dimensional ratios, the shapes and the like of various portions in the drawings are not necessarily accurate.

[EMBODIMENT 1]

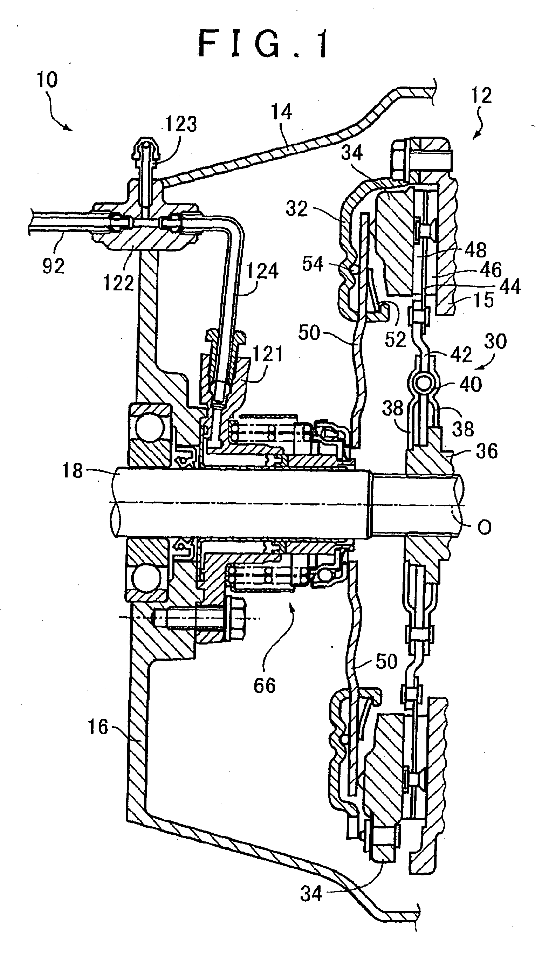

FIG. 1 is a sectional view showing a friction clutch 12 and its peripheral members that are provided in a vehicle equipped with a vehicle hydraulic clutch apparatus 10 in accordance with this embodiment of the invention. In FIG. 1, the friction clutch 12 is a dry-type single-plate disc clutch that constitutes a portion of a motive power transmission path from a drive force source of the vehicle to driving wheels, and functions as a friction coupling that transmits motive power by friction. In this embodiment, the friction clutch 12 is provided in a cylindrical clutch housing 14 that is connected integrally with an engine (not shown) that corresponds to the foregoing drive force source and also integrally with a housing of, for example, a well-known constant mesh parallel shaft-type manual transmission (not shown). Specifically, in the clutch housing 14, the friction clutch 12 is provided between the a circular plate-shaped flywheel 15 that is fixed to an end portion of an output shaft (i.e., a crankshaft) of the engine and that is rotationally driven integrally with the output shaft of the engine and an input shaft 18 of the manual transmission which is provided concentrically with the flywheel 15 and rotatably relative to the flywheel 15. The input shaft 18 is a rotary shaft that penetrates through a partition wall 16 located between the manual transmission and the friction clutch 12 and that is rotatably supported by the partition wall 16.

The friction clutch 12 includes a circular plate-shaped clutch disc 30 that is spline-fitted to a distal end portion of the input shaft 18, and an annular plate-shaped pressure plate 34 that is positioned at a side of the clutch disc 30 opposite the flywheel 15 side within a clutch cover 32 fixed to an outer peripheral portion of the flywheel 15 and that is disposed so as to be able to be moved closer to and away from the clutch disc 30. Incidentally, the input shaft 18 of the manual transmission functions also as an output shaft of the friction clutch 12 (i.e., a clutch output shaft).

The clutch disc 30 includes: a circular plate-shaped hub 36 whose inner peripheral portion is spline-fitted to the input shaft 18; a pair of annular plate-shaped friction plates 38 fixed to an outer peripheral portion of the hub 36; an annular plate-shaped disc plate 42 provided so as to be able to transmit motive power to the two friction plates 38 via a plurality of damper springs 40 that are arranged in a circumferential direction and sandwiched between the two friction plates 38; an annular plate-shaped disc plate 44 which has flexibility and whose inner peripheral portion is fixed to an outer peripheral portion of the disc plate 42; and annular plate-shaped friction members (facings or linings) 46 and 48 that are fixed to both side surfaces of the disc plate 44 which face the flywheel 15 and the pressure plate 34, respectively. The friction members 46 and 48 are made of a high-friction coefficient material obtained by kneading and fixing, for example, glass fiber, phenol resin, rubber, a friction adjustment agent, etc.

Besides, the friction clutch 12 includes an annular plate-shaped diaphragm spring 50 which is provided at a side of the pressure plate 34 opposite the clutch disc 30. A portion of the annular plate-shaped diaphragm spring 50 between its outer peripheral end portion and its inner peripheral end portion is sandwiched by two annular-shaped fulcrum members 52 and 54 that are disposed in the clutch cover 32. The outer peripheral end portion of the diaphragm spring 50 urges the pressure plate 34 toward the clutch disc 30. When the inner peripheral end portion of the diaphragm spring 50 is pressurized to the clutch disc 30 side in the direction of its axis, the outer peripheral end portion thereof moves in such a direction as to separate from the pressure plate 34 while the diaphragm spring 50, supported by the fulcrum members 52 and 54, is rotating about the axis. Then, when the pressurization of the inner peripheral end portion of the diaphragm spring 50 to the flywheel 15 side is discontinued, the outer peripheral end portion thereof is returned to the state of urging the pressure plate 34 toward the clutch disc 30, by the elastic restoration force of the diaphragm spring 50.

In the friction clutch 12 constructed as described above, when external force does not act on the inner peripheral end portion of the diaphragm spring 50, the clutch disc 30 is clamped between the pressure plate 34 and the flywheel 15 since the pressure plate 34 is pressurized to the clutch disc 30 side by the outer peripheral end portion of the diaphragm spring 50. In this situation, therefore, a fully engaged state in which the clutch disc 30, the flywheel 15 and the pressure plate 34 are frictionally engaged via the friction member 46 and the friction member 48 is brought about, and the flywheel 15 and the clutch disc 30 are in a power transmission state. When the inner peripheral end portion of the diaphragm spring 50 is operated to the clutch disc 30 side in the direction of the axis, the pressurizing force of the pressure plate 34 to the clutch disc 30 side changes (decreases) according to the operation force on the inner peripheral end portion of the diaphragm spring 50, that is, the clutch operation force. Then, when the pressurizing force completely disappears, a fully released state in which the friction engagement of the clutch disc 30, the flywheel 15 and the pressure plate 34 is released is brought about, and therefore the motive power transmission between the flywheel 15 and the clutch disc 30 is cut off.

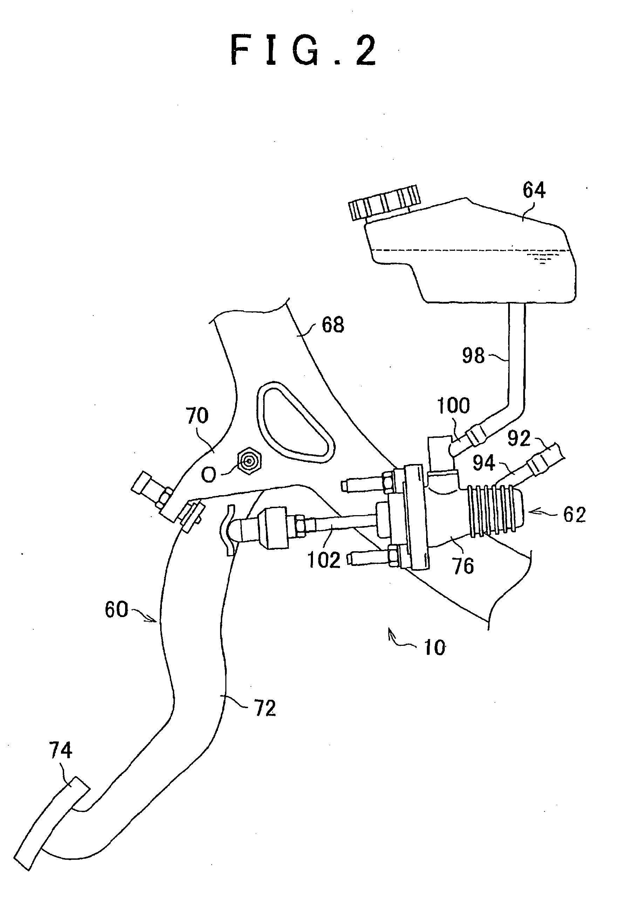

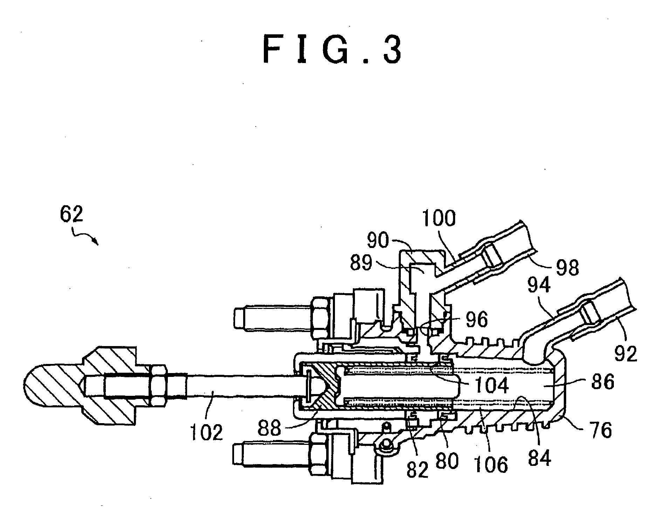

FIG. 2 is a diagram showing a portion of the vehicle hydraulic clutch apparatus 10 for actuating the friction clutch 12 shown in FIG. 1. In FIG. 1 and FIG. 2, the vehicle hydraulic clutch apparatus 10 includes: a clutch pedal 60 (see FIG. 2) that is operated (depressed) by a driver of the vehicle in order to change the state of actuation of the friction clutch 12; a clutch master cylinder 62 (see FIG. 2) that has a pressure chamber 86 (see FIG. 3) that generates a clutch working oil pressure commensurate with the amount of depression (amount of operation) of the clutch pedal 60 in response to the depressing operation of the clutch pedal 60; a reservoir tank 64 (see FIG. 2) that holds a surplus amount of the working oil; and a concentric slave cylinder 66 (hereinafter, termed the slave cylinder 66) shown in FIG. 1 which actuates (engages or disengages) the friction clutch 12 when receiving the clutch working oil pressure that is output from the clutch master cylinder 62.

The clutch pedal 60 includes: a pedal lever 72 whose proximal end portion is supported so as to be pivotable about an axis O by a clutch pedal bracket 70 that is provided in a dash panel 68 that partitions a cabin and an engine compartment of the vehicle from each other; and a pedal pad 74 that is a depressing operation portion that is fixed to a distal end portion of the pedal lever 72. The foregoing pedal lever 72 is given urging force in a direction toward the driver side (the left side in FIG. 2) by a return spring (not shown). When the driver depresses the pedal pad 74 against the urging force, the friction clutch 12 is actuated to become released. When the driver performs a return operation of discontinuing the depressing operation on the pedal pad 74, the friction clutch 12 becomes engaged.

FIG. 3 is a sectional view showing a clutch master cylinder 62 (hereinafter, termed the master cylinder 62) shown in FIG. 2. In FIG. 2 and FIG. 3, the clutch master cylinder 62 is provided for converting the depressing force that acts on the clutch pedal 60 into oil pressure, and includes: a cylinder main body having the shape of a bottomed cylinder, that is, a cylinder housing 76, that is, for example, fixed to the dash panel 68; a first cup 80 and a second cup 82 that are a pair of annular seal members that are fitted in the cylinder housing 76 and are spaced from each other by a predetermined distance in the direction of the axis; and a piston 88 that is fitted in the cylinder housing 76 so as to be slidable in the direction of the axis, on inner peripheral portions of the first cup 80 and of the second cup 82, and that, together with an inner peripheral surface 84 of the cylinder housing 76, forms a pressure chamber 86 for generating working oil pressure.

A linking pipe 94 is projected from a distal end portion of the cylinder housing 76. The linking pipe 94 has an opening that communicates with the pressure chamber 86 formed within the cylinder housing 76, and the linking pipe 94 has a tubular shape. An end portion of a connecting hose (elastic tube) 92 for connecting the clutch master cylinder 62 to the slave cylinder 66 is fitted to a distal end portion of the linking pipe 94. Besides, a bottomed cylinder-shaped chamber housing (chamber) 90 having a storage chamber 89 of a predetermined capacity is fitted to an upper portion of an outer peripheral portion of the cylinder housing 76. The storage chamber 89 in the chamber housing 90 communicates with the pressure chamber 86 in the cylinder housing 76, through a working oil supply hole 96 that penetrates through a wall of the cylinder housing 76 at a position between the first cup 80 and the second cup 82 in the direction of the axis of the cylinder housing 76. Then, a linking pipe 100 is projected from the chamber housing 90. The linking pipe 100 is protruded from a cylinder-shaped outer peripheral portion of the chamber housing 90, and has at its distal end an opening that communicates with the storage chamber 89 formed in the chamber housing 90. The linking pipe 100 has a tubular shape. An end portion of a connecting hose (elastic tube) 98 for connecting the clutch master cylinder 62 to the reservoir tank 64 is fitted to an outer peripheral surface of a distal end portion of the liking pipe 100. In this embodiment, the working oil supply hole 96, the storage chamber 89 in the chamber housing 90, the linking pipe 100 and the connecting hose 98 form an oil passageway that provides communication between the pressure chamber 86 of the clutch master cylinder 62 and the reservoir tank 64. Besides, the linking pipe 94 and the connecting hose 92, and also a transit member 122 and a piping 124 (which are described below) form an oil passageway (corresponding to an oil passageway in the invention) that provides communication between the pressure chamber 86 of the clutch master cylinder 62 and a pressure chamber 114 of the slave cylinder 66. Besides, the transit member 122 is provided with a breather 123 (described below). The air that resides in the oil passageway is let out from an outlet of the breather 123.

Besides, as for the clutch master cylinder 62, a rod 102 for transmitting the depressing operation on the pedal lever 72 to the piston 88 is provided between the pedal lever 72 and an end surface of the piston 88 that is on a side of the piston 88 opposite the pressure chamber 86. The piston 88 is slid according to the amount of depression of the clutch pedal 60 in a stroke from a position at the side of an end (first end side) of the pressure chamber 86, that is, a position at which the capacity of the pressure chamber 86 becomes maximum as shown in FIG. 3, to a position at the side of another end (second end side) of the pressure chamber 86, that is, a position at which the capacity of the pressure chamber 86 becomes minimum. Then, the piston 88 is provided with a communication hole 104 that provides communication between the pressure chamber 86 and the working oil supply hole 96 when the piston 88 is moved to the position at the first end side. The communication hole 104 functions also as an oil relief hole, and keeps the pressure chamber 86 and the reservoir tank 64 in a communicating state during an early period of pedal operation during which the amount of operation of the clutch pedal 60 is less than a predetermined value, and which continues until the communication hole 104 is completely closed by the first cup 80 when the piston 88 moves a predetermined distance from the position at the first end side toward the opposite side. Besides, a return spring 106 that urges the piston 88 toward the side opposite the pressure chamber 86 (i.e., urges the piston 88 in such a direction that the capacity of the pressure chamber 86 increases) is disposed within the pressure chamber 86 of the clutch master cylinder 62. Therefore, the piston 88 is returned to the position at the first end side when the return operation of discontinuing the depression of the pedal lever 72 is performed.

In the clutch master cylinder 62 constructed as described above, the piston 88 is moved according to the depressing operation of the clutch pedal 60, and then the pressure chamber 86 is caused to be in a tightly closed state as the communication hole 104 of the piston 88 is completely closed by the first cup 80. Then, by moving the piston 88 further toward the position at the second end side, the working oil in the pressure chamber 86 is pressurized so that a predetermined pressure increase of the clutch working oil pressure starts. Besides, when the depressing operation of the clutch pedal 60 has been discontinued, the working oil supply hole 96 and the pressure chamber 86 communicate with each other via the communication hole 104, that is, the reservoir tank 64 and the pressure chamber 86 communicate with each other, so that the amount of the working oil in the oil passageway of the vehicle hydraulic clutch apparatus 10 is appropriately adjusted. For example, in the case where the amount of the working oil in the oil passageway becomes insufficient due to changes (decreases) in the volume of the working oil as the working oil temperature changes, the working oil is charged into the oil passageway from the reservoir tank 64. On the other hand, in the case where a surplus amount of the working oil in the oil passageway occurs, the working oil is caused to flow toward the reservoir tank 64. Besides, as the friction clutch 12 abrades, the posture of the clutch cover 32 changes, and therefore the amount of the working oil needed in the oil passageway changes. For such changes, too, the amount of the working oil is adjusted by the reservoir tank 64.

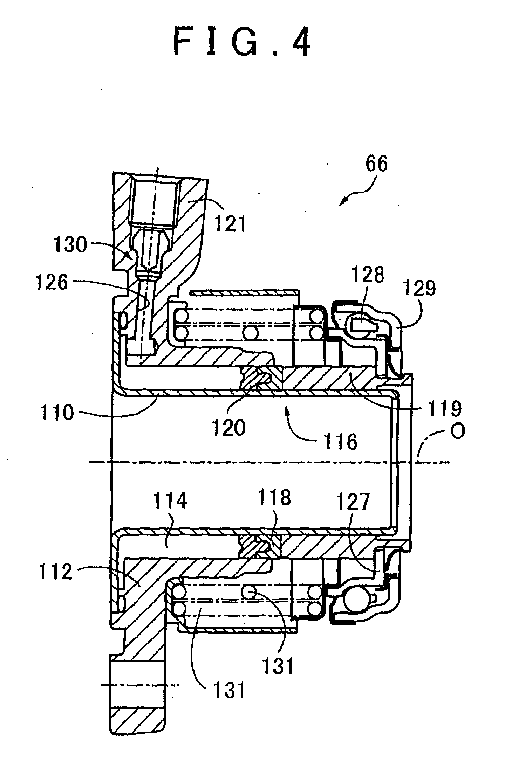

FIG. 4 is a sectional view showing a concentric slave cylinder (CSC) 66 shown in FIG. 1. Referring to FIG. 1 and FIG. 4, the slave cylinder 66 includes a cylindrical inner sleeve 110 and a cylindrical outer sleeve 112 through which the input shaft 18 extends, and which are fixed in position to the partition wall 16, which is an unrotatable member. The inner sleeve 110 and the outer sleeve 112 are disposed concentrically with the axis O, and the outer sleeve 112 is disposed at an outer peripheral side of the inner sleeve 110. Besides, an annular space is formed between an outer peripheral wall of the inner sleeve 110 and an inner peripheral wall of the outer sleeve 112. This annular space forms a pressure chamber 114 (described below). The pressure chamber 114 is a hydraulically tight space that is formed in order to accept the clutch working oil pressure that is output from the master cylinder 62. The pressure chamber 114 is defined by the inner sleeve 110, the outer sleeve 112, and a slidable cup 120 that is slidably fitted between the outer peripheral wall of the inner sleeve 110 and the inner peripheral wall of the outer sleeve 112 and that functions also as a seal member. At a side of the slidable cup 120 opposite the pressure chamber 114, an annular output piston 116 that is fitted so as to be slidable in the direction of the axis within the space between the outer peripheral wall of the inner sleeve 110 and the inner peripheral wall of the outer sleeve 112 is disposed adjacent to the slidable cup 120. The output piston 116, when receiving the clutch working oil pressure supplied into the pressure chamber 114, moves in the direction of the axis via the slidable cup 120, and transmits the clutch operation force to the friction clutch 12. The output piston 116 is constructed of two members, that is, an annular first piston 118 and an annular second piston 119. The two pistons are separable from each other in the direction of the axis. That is, a gap can be formed between the first piston 118 and the second piston 119. Because the gap is formed, vibration from the engine is absorbed. Besides, when receiving the clutch working oil pressure in the pressure chamber 114, the first piston 118 is moved to the friction clutch 12 side via the slidable cup 120, and the first piston 118 comes into contact with the second piston 119. Therefore, the thrust force is transmitted to the second piston 118 as well, so that the second piston 119 is moved also to the friction clutch 12 side.

An extended portion 121 that is extended radially outward is formed at an end of the outer sleeve 112. An end portion of a piping 124 connected to the connecting hose 92 via the transit member 122 provided on the clutch housing 14 shown in FIG. 1 is connected to an outer peripheral edge of the extended portion 121. Besides, the oil passageway of the piping 124 communicates with the pressure chamber 114 via an oil passageway 126 that is formed within the extended portion 121. Therefore, the pressure chamber 114 of the slave cylinder 66 communicates with the pressure chamber 86 of the clutch master cylinder 62 via the oil passageway 126, the piping 124, the transit member 122, the connecting hose 92 and the linking pipe 94.

A release bearing 128 for enabling the output piston 116 and the diaphragm spring 50 to transmit force in the direction of the axis to each other while allowing the output piston 116 and the diaphragm spring 50 to rotate relative to each other is provided between the output piston 116 and the diaphragm spring 50. This release bearing 128 transmits the clutch operating force from the output piston 116 to the diaphragm spring 50, and the spring reaction force from the diaphragm spring 50 to the output piston 116. The release bearing 128 is retained sandwiched between an inner bearing retaining plate 127 and an outer bearing retaining plate 129. The inner bearing retaining plate 127 and the outer bearing retaining plate 129 are rotatable relative to each other via the release bearing 128. Besides, the release bearing 128 is always urged to the diaphragm spring 50 side by two springs 131 that are interposed between the outer sleeve 112 and the inner bearing retaining plate 127, so that a diaphragm spring 50-side end surface of the outer bearing retaining plate 129 is always in contact with an inner periphery-side end portion of the diaphragm spring 50.

The output piston 116 is constructed so as to be moved according to the clutch working oil pressure supplied to the pressure chamber 114, from a position that corresponds to the fully engaged state of the friction clutch 12, that is, a position at which the capacity of the pressure chamber 114 becomes the smallest, to a position that corresponds to the fully released state of the friction clutch 12, that is, a position at which the capacity of the pressure chamber 114 becomes the largest. Then, the greater the clutch working oil pressure in the pressure chamber 114, the greater the clutch operating force transmitted from the output piston 116 to the diaphragm spring 50 becomes. Besides, as described above, the output piston 116 is constructed of the first piston 118 and the second piston 119 that are divided from each other in the direction of the axis. The first piston 118 and the second piston 119 are separable from each other in the direction of the axis. The gap formed between the first piston 118 and the second piston 119 absorbs vibration from the engine side.

In the slave cylinder 66 constructed as described above, according to the clutch working oil pressure supplied to the pressure chamber 114, the output piston 116 moves so as to transmit the clutch operating force to the inner periphery-side end portion of the diaphragm spring 50. Incidentally, in this construction, the greater the clutch working oil pressure supplied to the pressure chamber 114 becomes, that is, the further in the rightward direction in FIG. 1 the output piston 116 moves, the greater the clutch operating force input to the diaphragm spring 50 becomes.

In the vehicle hydraulic clutch apparatus 10 of this embodiment, an orifice 130 that restrains the flow or passage of the working oil from the slave cylinder 66 side (the pressure chamber 114 side) to the master cylinder 62 side (the pressure chamber 86 side) which occurs when the return operation of discontinuing the depression of the clutch pedal 60 is performed is provided within the slave cylinder 66. The orifice 130 is a throttle hole that increases the flow resistance of the working oil by reducing the area of a cross-section perpendicular to the direction in which the working oil in the oil passageway flows (hereinafter, termed the cross-sectional area), and functions as a flow restraint device in the invention.

FIG. 5 is an enlarged partial sectional view showing a state in which an end portion of the piping 124 is connected to the extended portion 121 of the outer sleeve 112 in FIG. 4. As shown in FIG. 5, the orifice 130 is provided in a connecting portion 134 between an opening portion 133 of the oil passageway 126 that is formed in the extended portion 121 of the outer sleeve 112 and that communicates with the pressure chamber 114 and the piping 124 that constitutes the oil passageway that communicates with the master cylinder 62. Concretely, a step portion is formed within the opening portion 133 that extends in the direction of the axis of the piping 124. A seat member 132 in which the orifice 130 is formed is inserted in the opening portion 133 so that an outer peripheral step portion formed on an outer periphery of the seat member 132 contacts the step portion of the opening portion 133. Besides, a distal end of the piping 124 is provided with a flared portion 125 that is radially expanded. A distal end of the flared portion 125 is in contact with an end portion of the seat member 132 that is at a side of the seat member 132 facing opposite the inserting direction. Then, a nut 131 fitted to the outer peripheral side of the piping 124 is screwed to a threaded portion 135 that is formed on an inner peripheral surface of the opening portion 133 of the extended portion 121 so that the flared portion 125 of the piping 124 presses the seat member 132 in the inserting direction. Therefore, the piping 124 is connected to the opening portion 133, and the seat member 132 is pressed and therefore fixed via the flared portion 125.

The foregoing seat member 132 has an oil passageway hole 136 for passing the working oil. The diameter of the oil passageway hole 136 is equal to the inside diameter of the oil passageway of the piping 124. Besides, an end side portion of the seat member 132 is provided with a throttle hole 139 for increasing the flow resistance of the working oil by reducing the cross-sectional area of the oil passageway. The foregoing throttle hole 139 functions as the orifice 130. The throttle hole 139 is formed such that a cross-sectional area of the oil passageway sharply reduces in a direction from the slave cylinder 66 side to the master cylinder 62 side. A taper surface 138 is formed at the throttle hole 139 in a taper shape such that the cross-sectional area of the oil passageway gradually decreases in a direction from the master cylinder 62 side to the slave cylinder 66 side (i.e., to the throttle hole 139 side). That is, the throttle hole has a minimum cross-sectional area portion whose cross-sectional area is the smallest, and has a taper portion that is shaped so that the cross-sectional area of the oil passageway gradually decreases in the direction from the master cylinder 62 side toward the minimum cross-sectional area portion, and has another portion that is shaped so that the cross-sectional area of the oil passageway in the portion reduces in the direction from the slave cylinder 66 side toward the minimum cross-sectional area portion more sharply than in the taper portion. Therefore, when the working oil in the oil passageway is passed from the slave cylinder 66 side to the master cylinder 62 side by performing the return operation of releasing depression of the clutch pedal 60, the orifice 130 causes a flow resistance. On the other hand, when the working oil is passed from the master cylinder 62 side to the slave cylinder 66 side by performing the depressing operation of the clutch pedal 60, the orifice 130 causes a flow resistance that is smaller than the foregoing flow resistance since the working oil flows along the taper surface 138 and therefore the disturbance in the flow relatively small. Besides, in this embodiment, since the orifice 130 is formed integrally with the seat member 132 that is used in a related-art construction as well, there is no increase in the number of component parts, and the increase in production cost is considerably restrained.

Thus, in an end side portion of the seat member 132, the oil passageway is tapered so that the cross-sectional area thereof gradually decreases from the master cylinder 62 side to the slave cylinder 66 side. Therefore, when the clutch pedal 60 is depressed and therefore the working oil flows from the master cylinder 62 side to the slave cylinder 66 side, the working oil flows along the taper surface 138, so that the disturbance of the flow of the working oil is restrained and the pressure loss due to the decrease of the cross-sectional area is relatively small, and the flow resistance to the working oil is also relatively small. On the other hand, when the return operation of releasing depression of the clutch pedal 60 is performed and therefore the working oil flows from the slave cylinder 66 side to the master cylinder 62 side, the working oil flows through the oil passageway whose cross-sectional area is sharply reduced by the throttle hole 139, so that disturbance in the flow occurs in the oil passageway and the pressure loss is relatively great and the flow resistance to the working oil is also relatively great. That is, when the clutch pedal 60 is depressed, the flow resistance to the working oil reduces and the pressure loss is restrained. On the other hand, when the return operation of discontinuing the depression of the clutch pedal 60 is performed, the flow resistance becomes large and the pressure loss also becomes large. Incidentally, the hole diameter of the throttle hole 139 and the taper angle of the taper surface 138 are optimally set beforehand through experiments or calculation.

FIG. 6 shows a state in which the depressing operation of the clutch pedal 60 is performed to the maximum amount of depression and the piston 88 of the master cylinder 62 and the output piston 116 (the first piston 118 and the second piston 119) of the slave cylinder 66 have been brought to the positions that correspond to the fully released state of the friction clutch 12. During this state, in the master cylinder 62, a clutch working oil pressure that corresponds to the amount of depression of the clutch pedal 60 is generated since the master cylinder 62 is cut off from communication with the reservoir tank 64. When from the state shown in FIG. 6, the depression of the clutch pedal 60 is discontinued, that is, the return operation of the clutch pedal 60 is performed, the first piston 118 and the second piston 119 of the slave cylinder 66 receive the spring reaction force of the diaphragm spring 50 and are therefore moved to the side opposite the diaphragm spring 50, and the piston 88 of the master cylinder 62 receives the spring reaction force of the return spring 106 and are therefore moved to the side opposite to the return spring 106.

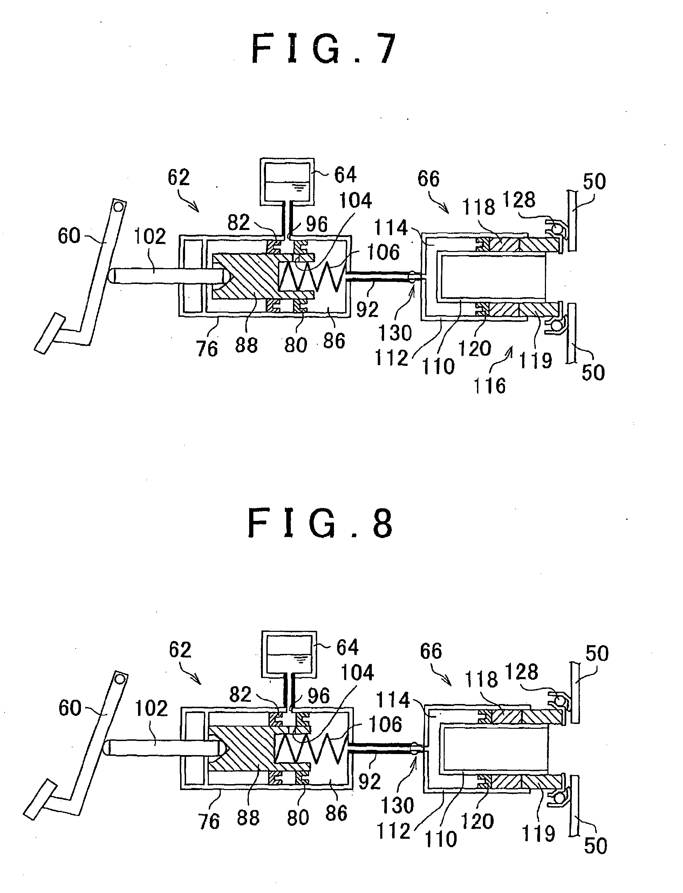

FIG. 7 shows a state immediately before the communication hole 104 formed in the piston 88 of the clutch master cylinder 62 provides communication between the working oil supply hole 96 and the pressure chamber 86 as the piston 88 is moved from the state shown in FIG. 6 by performing the return operation of the clutch pedal 60. In the state shown in FIG. 7, the working oil in the pressure chamber 114 and the pressure chamber 86 is in a state in which the working oil is flowing from the pressure chamber 114 side (the slave cylinder 66 side) to the pressure chamber 86 side (the master cylinder 62 side). If the return operation of the clutch pedal 60 is continuously performed from the state shown in FIG. 7, the piston 88 is moved toward the position that corresponds to the fully engaged state of the friction clutch 12. Then, when the working oil supply hole 96 and the pressure chamber 86 come to communicate with each other via the communication hole 104, the pressure chamber 86 comes to communicate with the reservoir tank 64, so that the clutch working oil pressure becomes substantially equal to the atmospheric pressure.

FIG. 8 shows a state in which the return operation of the clutch pedal 60 is completed and therefore the piston 88 has come to the position that corresponds to the fully engaged state of the friction clutch 12. Thus, during the transition from the state shown in FIG. 7 to the state shown in FIG. 8, the communication hole 104 provides communication between the working oil supply hole 96 and the pressure chamber 86. It is to be noted herein that immediately after the state shown in FIG. 8 is brought about, the inertia of the working oil moving from the pressure chamber 114 side (the slave cylinder 66) to the pressure chamber 86 side (the master cylinder 62) causes the working oil in the pressure chamber 86 to flow toward the reservoir tank 64. At this time, in this embodiment, since the hydraulic clutch apparatus is equipped with the orifice 130 as a flow restraint device that restrains the flow of the working oil from the pressure chamber 114 of the slave cylinder 66 toward the pressure chamber 86 of the master cylinder 62, the inertia of the working oil flowing to the master cylinder 62 side (reservoir tank 64 side) is reduced by the orifice 130. Specifically, the flow resistance of the orifice 130 causes pressure loss, whereby the inertial energy of the working oil is reduced. Therefore, this restrains the occurrence of negative pressure within the pressure chamber 114 that is caused by the working oil flowing from the slave cylinder 66 (pressure chamber 114) to the master cylinder 62 side due to its inertia immediately after the return operation of the clutch pedal 60 is completed. This in turn restrains the first piston 118 from being drawn to the pressure chamber 114 side by the negative pressure, and therefore restrains the gap formed between the first piston 118 and the second piston 119 from becoming larger than necessary. That is, the gap formed between the first piston 118 and the second piston 119 is restrained from becoming larger than the gap size that makes it possible to restrain the transmission of vibration of the engine.

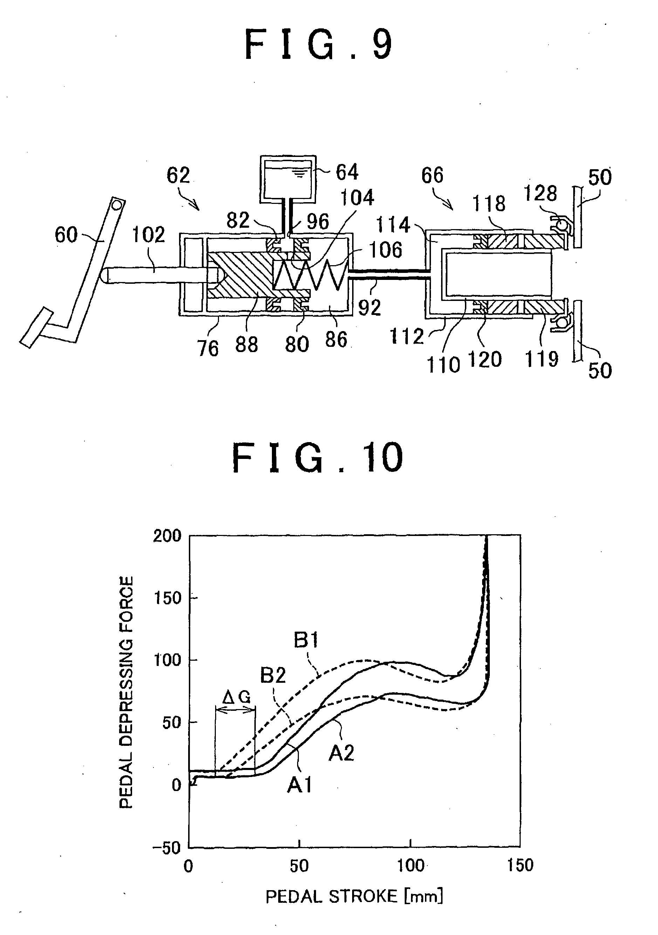

Incidentally, FIG. 9 shows a state brought about in the case where a quick return operation of the clutch pedal 60 is performed in a construction that is not equipped with the orifice 130. In this case, due to the inertia of the working oil flowing from the pressure chamber 114 of the slave cylinder 66 to the master cylinder 62 side, negative pressure occurs in the pressure chamber 114 and therefore the first piston 118 moves relatively to the second piston 119 in the direction away from the second piston 119 so that, as shown in FIG. 9, the gap between the first piston 118 and the second piston 119 becomes larger than the gap that is needed for the restraint of vibration transmission. Incidentally, if the foregoing gap becomes large, a delay of the actuation of the second piston 119 occurs until the gap is eliminated, that is, the ineffective stroke of the clutch pedal 60 increases, the next time the clutch pedal is depressed. Therefore, problems occur, such as a clutch disengagement failure, deterioration of the clutch feeling, deterioration of the return of the clutch pedal, etc.

FIG. 10 is a diagram about a clutch device that is not equipped with the orifice 130, showing comparison between examples of experiment data that shows a relation between the pedal depression force and the pedal stroke [mm] in the depressing operation of the clutch pedal 60 that is performed subsequently to a relatively slow return operation of the clutch pedal 60 in which the depression of the clutch pedal 60 is released while the driver's foot remains on the pedal pad 74, and examples of experiment data that shows a relation between the pedal depression force and the pedal stroke [mm] in the depressing operation of the clutch pedal 60 that is performed subsequently to a return operation of the clutch pedal 60 that is performed by removing the driver's foot from the pedal pad 74 at the position at which the clutch pedal 60 is depressed, or subsequently to a relatively quick return operation of the clutch pedal 60 in which the depression of the clutch pedal 60 is released at a speed that is close to the releasing speed that is achieved when the driver's foot is removed from the pedal pad 74. In FIG. 10, solid lines A1 and A2 show the foregoing relations in the case where the quick return operation of the clutch pedal 60 has been performed, and dotted lines B1 and B2 show the relations in the case where the relatively slow return operation of the clutch pedal 60 has been performed. As shown in FIG. 10, when the quick return operation of the clutch pedal 60 has been performed, the pedal stroke at which the pedal depression force (clutch working oil pressure) begins to increase is greater by about 15 [mm], that is, the pedal backlash is greater by ΔG, than when the relatively slow return operation of the clutch pedal 60 has been performed. Incidentally, the increase ΔG in the pedal backlash is caused by the gap between the first piston 118 and the second piston 119 in FIG. 9, and corresponds to the clutch stroke that is needed in order to eliminate the forgoing gap when the clutch pedal 60 is depressed.

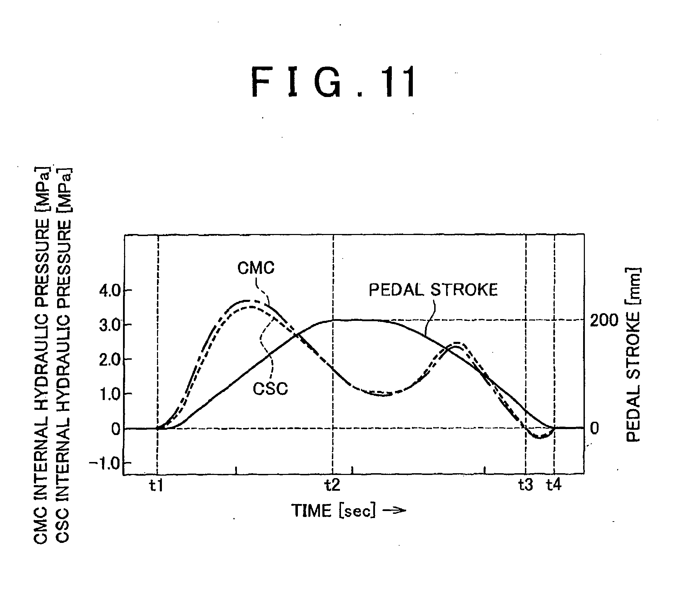

FIG. 11 is a time chart showing changes in the oil pressure in the pressure chamber 86 of the master cylinder 62 and changes in the oil pressure in the pressure chamber 114 of the slave cylinder 66 which occur when the operation of depressing clutch pedal 60 and the operation of returning the depression of the clutch pedal 60 are performed. In FIG. 11, CMC shows the hydraulic pressure in the clutch master cylinder, and CSC shows the hydraulic pressure in the concentric slave cylinder. In FIG. 11, when the depressing operation of the clutch pedal 60 is started at a time point t1, the working oil in the oil passageway is pressurized, so that the oil pressure in the pressure chamber 86 of the master cylinder 62 and the oil pressure in the pressure chamber 114 of the slave cylinder 66 are raised. At this time, as the pressure raising operation is performed at the master cylinder 62 side, the oil pressure at the master cylinder 62 side becomes higher than the oil pressure at the slave cylinder 66 side. Then, after the operation of returning the clutch pedal 60 from the depressed state is started at the time point t2, the oil pressure in the pressure chamber 86 of the master cylinder 62 and the oil pressure in the pressure chamber 114 of the slave cylinder 66 temporarily increase, and then the oil pressures declines. At this time, the working oil flows out from the slave cylinder 66, so that the oil pressure in the slave cylinder 66 becomes higher than the oil pressure at the master cylinder 62 side due to the influence of pressure loss of the piping or the like. Then, at the time point t3 immediately before the depression of the clutch pedal 60 is completely released, negative pressure occurs in the oil passageway due to the influence of the inertia of the working oil. Due to this negative pressure, the first piston 118 is moved toward the pressure chamber 114, forming a gap that is larger than necessary. However, the occurrence of the negative pressure is restrained in this embodiment by the provision of the orifice 130 in the oil passageway.

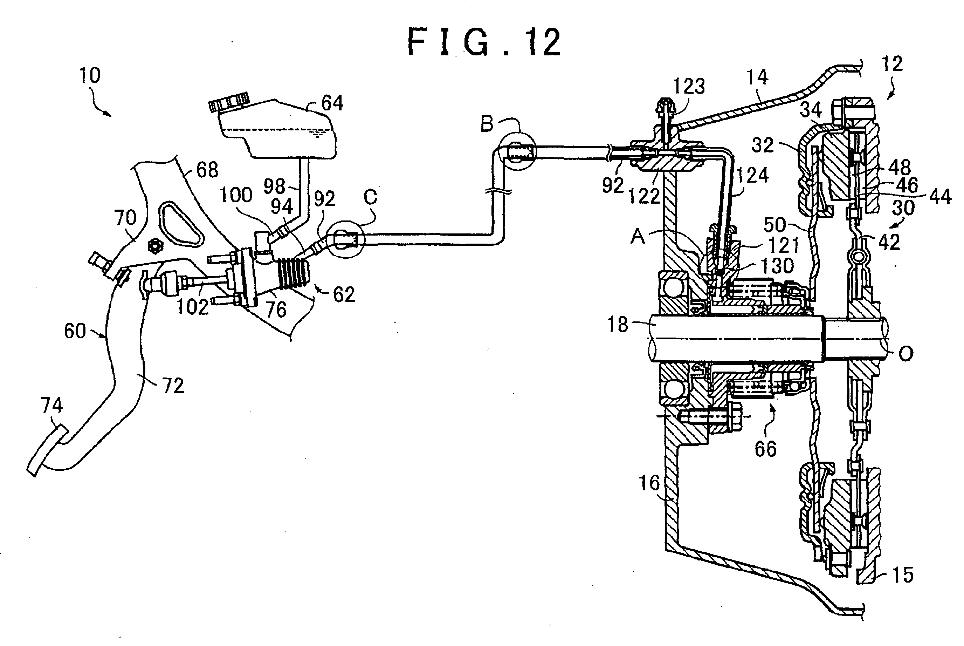

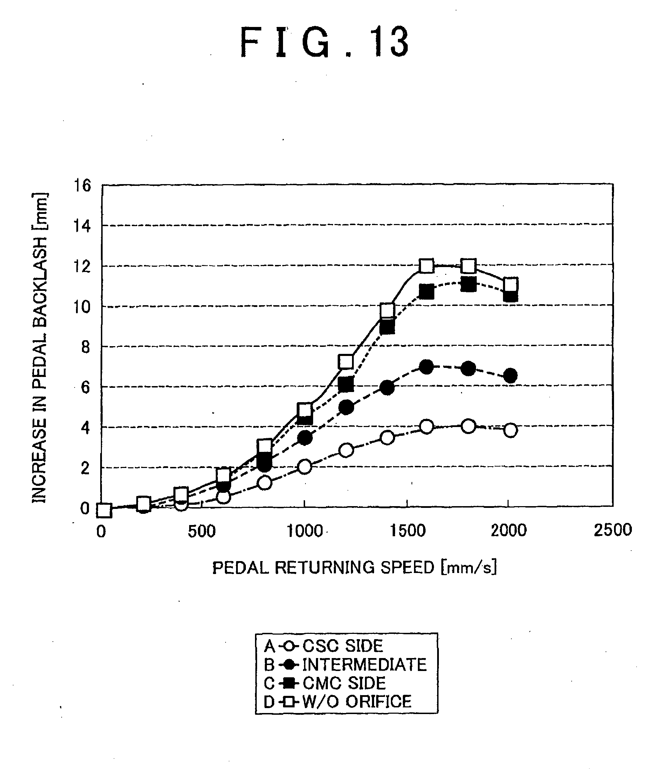

In this embodiment, the orifice 130 provided in the slave cylinder 66 (concretely, in the connecting portion 134 between the slave cylinder 66 and the piping 124). It is desirable that the orifice 130 be provided at an optimum position such that the negative pressure can be effectively restrained. Therefore, relations between the pedal returning speed and the amount of increase in the pedal backlash were investigated with regard to the cases where the orifice 130 was provided at one of various positions (A, B and C) in the oil passageway which are shown in the overall construction diagram of the vehicle hydraulic clutch apparatus 10 shown in FIG. 12, and in the case (D) where the orifice 130 was not provided. FIG. 13 shows relation between the pedal returning speed and the amount of increase in the pedal backlash at an oil temperature of 80°C in the cases where the orifice 130 was provided at one of the positions (A, B and C) shown in FIG. 12 and the case (D) where the orifice 130 was not provided. Incidentally, the pedal returning speed corresponds to the moving speed of the clutch pedal 60 occurring when the depression of the clutch pedal 60 is released, and the fastest pedal returning speed corresponds to the case where the driver removes the foot from the depressed clutch pedal 60.

As shown in FIG. 13, in the foregoing conditions (A to D), the amount of increase in the pedal backlash increased with increases in the pedal returning speed. That is, FIG. 13 shows that with increases in the pedal returning speed, the negative pressure that occurs in the pressure chamber 114 of the slave cylinder 66 increases, and the gap between the first piston 118 and the second piston 119 increases in size. Then, since a stroke of the clutch pedal 60 is needed in order to eliminate the gap, the pedal backlash increases. Besides, if the pedal returning speed exceeds a predetermined value, the amount of increase of the peal backlash becomes substantially constant.

In comparison between the case where the orifice 130 was provided at one of the foregoing positions (A, B and C) in the oil passageway of the vehicle hydraulic clutch apparatus 10 shown in FIG. 12 and the case (D) where the orifice 130 was not provided, the amount of increases in the pedal backlash was largest in the case (D) where the orifice 130 was not provided. On the other hand, the amount of increase in the pedal backlash was the smallest in the case (A) where the orifice 130 was provided within the slave cylinder 66. Besides, in the case (C) where the orifice 130 was provided near the master cylinder 62, the amount of increase in the pedal backlash was smaller than in the case (D) where the orifice 130 was not provided. In the case (B) where the orifice 130 was provided at an intermediate position between the master cylinder 62 and the slave cylinder 66, the amount of increase in the pedal backlash was smaller than in the case (C) where the orifice 130 was provided at the position C. That is, in the case where the orifice 130 is not provided, the amount of increase in the pedal backlash is the largest. The amount of increase in the pedal backlash is smaller the closer to the slave cylinder 66 side in the oil passageway the orifice 130 is disposed.

The pressure loss ΔP occurring in the case where the orifice 130 is provided is expressed by the following expression (1). In the expression (1), V represents the average flow speed of the working oil within the channel, $\rho$ represents the density of the working oil, and $\zeta$ represents a loss coefficient that is empirically determined. As shown in the expression (1), if the orifice 130 is provided, the pressure loss ΔP occurs, so that the inertia of the working oil that occurs when the working oil flows from the slave cylinder 66 side to the master cylinder 62 side is reduced and therefore the occurrence of the negative pressure is restrained.

$$\Delta P = \frac{V^2}{2} \cdot \rho \cdot \zeta \cdots \cdots (1)$$

The pressure loss ΔP caused by the friction in the oil passageway is expressed in expression (2). In the expression (2), V represents the flow speed in the piping, ρ represents the density of the working oil, D represents the diameter of the piping, and Re represents the well-known Reynolds number.

$$\Delta P = \frac{V^2}{2} \cdot \rho \cdot \frac{64}{Re} \cdot \frac{1}{D} \cdots \cdots (2)$$

From the expression (1), it can be understood that the pressure loss ΔP is related to the flow speed V, and that the pressure loss ΔP is larger the greater the flow speed V. On the other hand, when the return operation of discontinuing the depressing operation of the clutch pedal 60 is performed, the working oil flows from the slave cylinder 66 side to the master cylinder 62 side, so that the flow speed V at the slave cylinder 66 side that corresponds to the upstream side is greater than the flow speed V at the master cylinder 62 side. As can be understood from the foregoing description and the expression (1), the pressure loss ΔP becomes greater when the orifice 130 is disposed at the slave cylinder 66 side. That is, the pressure loss ΔP is greater in the case where the orifice 130 is disposed at the slave cylinder 66 side, so that in that case, the inertia of the working oil is reduced and the occurrence of negative pressure is effectively restrained. Incidentally, the flow speed V declines with decreases in the distance to the master cylinder 62 side due to the pressure loss ΔP in the expression (2) which occurs when the working fluid flows through the piping. For example, in the case where the orifice 130 is disposed at the master cylinder 62 side, since the length of the piping of the working oil from the upstream side (the slave cylinder 66 side) is long, the pressure loss ΔP in the expression (2) increases and the flow speed V declines.

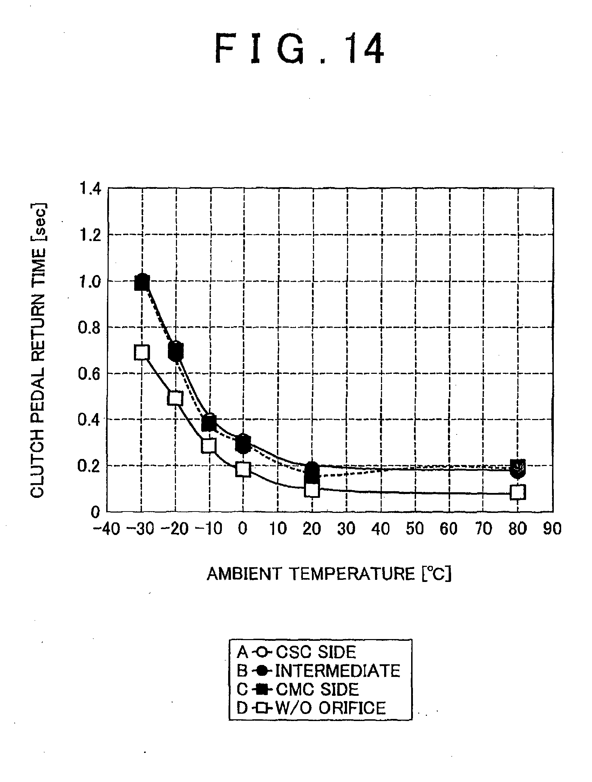

FIG. 14 shows relations between the ambient temperature and the clutch pedal return time in the conditions (A to D) as in FIG. 13. It can be understood from FIG. 14 that in the temperature range exceeding 20°C, the returning time of the clutch pedal 60 does not change whereas in the temperature range lower than or equal to 20°C, the returning performance of the clutch pedal 60 becomes worse as the temperature decreases. This is because as the oil temperature of the working oil declines, the viscosity of the working oil increases and correspondingly the flow resistance of the working oil increases. In the case (D) where the orifice 130 was not provided, there was no flow resistance caused by the orifice 130, and the returning time of the clutch pedal 60 was correspondingly shorter. On the other hand, in the cases (A, B and C) where the orifice 130 was provided, the returning time of the clutch pedal 60 was longer. However, no great difference in the returning time of the clutch pedal 60 depending on the mounting position of the orifice 130 was not found. Therefore, it has been ascertained that as a demerit of the provision of the orifice 130 achieving the pressure loss ΔP shown by the expression (1), the returning time of the clutch pedal 60 increases and such tendency is remarkable particularly at low temperatures, but that this characteristic does not considerably change depending on the mounting position of the orifice 130.

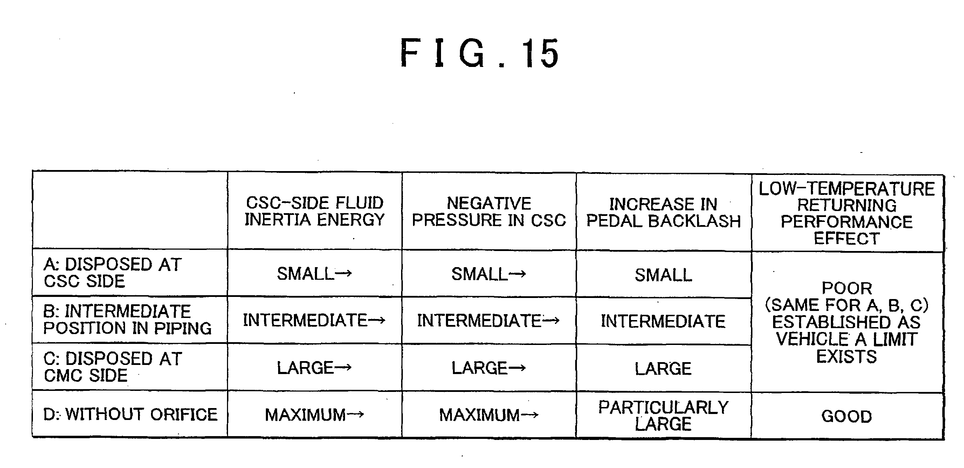

FIG. 15 is a table that shows results (tendencies) found on the basis of what are shown in FIGS. 13 and 14. As shown in FIG. 15, in the case (D) where the orifice 130 was not provided, the inertial energy of the working oil was maximum, and the negative pressure in the pressure chamber 114 of the slave cylinder 66 and the amount of increase in the pedal backlash were also maximum. Besides, the closer to the master cylinder 62 side in the oil passageway the orifice 130 was, the larger the inertial energy of the working oil was, and the larger the negative pressure in the pressure chamber 114 and the amount of increase in the pedal backlash were. In the case where the orifice 130 was disposed in the slave cylinder 66, the inertial energy of the working oil was the smallest and therefore the negative pressure of the pressure chamber 114 and the amount of increase in the pedal backlash were also small.

Besides, in the cases where the orifice 130 was provided, the returning characteristic of the clutch pedal 60 at low temperatures were lower than in the case where the orifice 130 was not provided, regardless of the mounting position of the orifice 130. Therefore, since the returning characteristic of the clutch pedal 60 at low temperatures is not considerably relevant to the mounting position of the orifice 130, it can be said to be most suitable that the orifice 130 be provided in the slave cylinder 66, taking into consideration the restraint of the amount of increase in the pedal backlash. Then, the dimensions of the orifice 130 and the like are optimally set by taking into consideration the restraint of the amount of increase in the pedal backlash and the returning characteristic of the clutch pedal 60 at low temperatures. For example, if the diameter of the throttle hole 139 of the orifice 130 is reduced, the amount of increase in the pedal backlash is restrained but the returning characteristic of the clutch pedal 60 at low temperature declines. Therefore, both the amount of increase in the pedal backlash and the returning characteristic of the clutch pedal 60 at low temperature are taken into account to set an optimum diameter of the throttle hole 139. In the case where the orifice 130 is disposed in the slave cylinder 66, the effect of restraining the amount of increase in the pedal backlash is more remarkable than in the cases where the orifice 130 is disposed at other positions in the oil passage. Therefore, in the case where the orifice 130 is disposed in the slave cylinder 66, the diameter of the throttle hole 139 can be made larger than in the other cases, and the returning characteristic of the clutch pedal 60 at low temperature can be improved. That is, the provision of the orifice 130 in the slave cylinder 66 makes it possible to achieve the two contradictory characteristics.

As described above, according to this embodiment, the orifice 130 that restrains the flow of the working oil from the slave cylinder 66 side to the master cylinder 62 side which occurs in association with the operation of the clutch pedal 60 is provided in the slave cylinder 66. Therefore, for example, if the pedal return operation of quickly releasing depression of the clutch pedal 60 is performed, the working oil flows from the slave cylinder 66 side to the master cylinder 62 side. Then, due to the influence of the inertia of the working oil, negative pressure is likely to occur in the oil passageway. However, the occurrence of negative pressure is restrained because the provision of the orifice 130 reduces the inertial energy of the working oil. Therefore, the pedal backlash that occurs in association with the occurrence of negative pressure, that is, the increase of the gap in the slave cylinder 66, is restrained, so that the increase in the ineffective stroke caused by the gap at the time of the next operation of depressing the clutch pedal can be reduced. Therefore, the operability of the clutch pedal 60 can be heightened.

Besides, according to the embodiment, since the orifice 130 is provided in the slave cylinder 66, the amount of reduction in the inertial energy achieved by the orifice 130 is larger than in the case where the orifice 130 is provided in the master cylinder 62 side. Therefore, the occurrence of negative pressure is effectively restrained. Therefore, the size increase of the gap in the slave cylinder 66 can be effectively restrained.

Besides, according to the embodiment, since the throttle hole 139 is formed in the foregoing manner, the flow resistance of the working oil is relatively large and the pressure loss of the working oil is relatively large in the case where the working oil flows from the slave cylinder 66 side to the master cylinder 62 side. On the other hand, in the case where the working oil flows from the master cylinder 62 side to the slave cylinder 66 side, the flow resistance of the working oil is relatively small and the pressure loss thereof is relatively small. Therefore, since the pressure loss can be changed according to the flowing direction of the working oil, it is possible to restrain the pressure loss and secure a sufficient amount of flow of the working oil when the clutch pedal 60 is depressed, and it is also possible to increase the pressure loss and therefore reduce the inertial energy of the working oil so that the occurrence of negative pressure can be restrained, when a pedal return operation of releasing depression of the clutch pedal 60 is performed.

Besides, according to the embodiment, due to the foregoing configuration of the throttle hole 139, when the working oil flows from the slave cylinder 66 side to the master cylinder 62 side, the working oil flows through the throttle hole 139 whose cross-sectional area sharply reduces, so that the flow of the working oil is disturbed and therefore the pressure loss increases. Besides, when the working oil flows from the master cylinder 62 side to the slave cylinder 66 side, the working oil flows through the throttle hole 139 along the tapered oil passageway wall without being disturbed, so that pressure loss is restrained. Therefore, the foregoing construction changes the pressure loss according to the moving direction of the working oil.

Besides, according the embodiment, since the orifice 130 is provided in the connecting portion 134 between the opening portion 133 of the oil passageway 126 that communicates with the pressure chamber 114 that is formed in the slave cylinder 66 and the piping 124 that constitutes the oil passageway that communicates with the master cylinder 62, the pressure loss is larger than in a construction in which the orifice 130 is provided at the master cylinder 62 side. Therefore, the amount of reduction in the inertial energy of the working oil increases, and the occurrence of negative pressure is effectively restrained. Besides, the provision of the orifice 130 to the connecting portion 134 makes it easy to dispose the orifice 130.

Besides, according to the embodiment, since the orifice 130 is formed integrally with the cylindrical seat member 132 that is inserted in the connecting portion 134 between the slave cylinder 66 and the piping 124 (i.e., inserted in the opening portion 133), the orifice 130 can be constructed merely by deforming the seat member 132. Therefore, it is possible to easily provide the orifice 130 without increasing the number of component parts.

Besides, according to the embodiment, the output piston 116 of the slave cylinder 66 is made of the first piston 118 and the second piston 119, and the two pistons are separable from each other in the direction of the axis. Therefore, as a gap is formed between the first piston 118 and the second piston 119, the vibration transmitted from the engine can be absorbed by the gap. Besides, when negative pressure occurs in the oil passageway due to performance of the quick pedal return operation of quickly releasing depression of the clutch pedal 60, the first piston 118 of the slave cylinder 66 is drawn to the pressure chamber 114 side by the negative pressure, so that the foregoing gap becomes large. Therefore, the next time the clutch pedal 60 is depressed, the ineffective stroke resulting from the increased gap becomes large, and therefore the operability of the clutch device declines. However, due to the provision of the orifice 130, the occurrence of the negative pressure is restrained, and the increase of the gap is restrained.

Next, Embodiment 2 of the invention will be described. Incidentally, in the following description, the portions of Embodiment 2 that are substantially the same as those of the foregoing embodiment are represented by the same reference characters, and will not be described in detail below.

[EMBODIMENT 2]

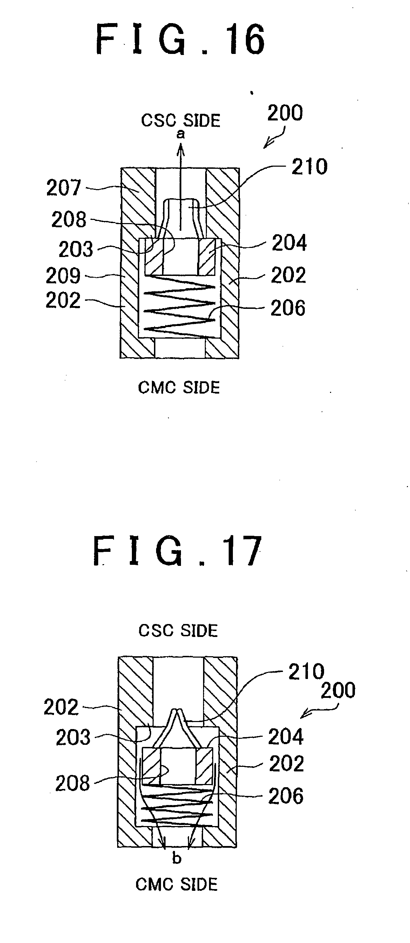

FIG. 16 is a diagram schematically showing a one-way throttle valve 200 (corresponding to a valve mechanism in the invention) as a flow restraint device provided in Embodiment 2 of the invention. In FIG. 16, a one-way throttle valve 200 is provided in an oil passageway connecting portion 134 between a piping 124 and an extended portion 121 of an outer sleeve 112, as in the foregoing embodiment. That is, the one-way throttle valve 200 is fitted, in place of the orifice 130 in Embodiment 1 described above, in the connecting portion 134 between the piping 124 and the extended portion 121. This one-way throttle valve 200 functions as a flow restraint device that restrains the flow of the working oil moving from the slave cylinder 66 side to the master cylinder 62 side which is caused in association with the operation of returning the clutch pedal 60 from the depressed state. The one-way throttle valve 200 is constructed so as to permit the working oil to flow from the master cylinder 62 side to the slave cylinder 66 side, and to restrict the flow of the working oil from the slave cylinder 66 side to the master cylinder 62 side.

The one-way throttle valve 200 includes a cylindrical housing 202, and a valve element 204 that is housed in the housing 202. The housing 202 has a small-diameter portion 207, a large-diameter portion 209 which houses the valve element 204, and whose inside diameter is larger than that of the small-diameter portion 207, and a valve seat portion 203 as a step portion that is formed between the small-diameter portion 207 and the large-diameter portion 209. The valve element 204 is fitted into the housing 202 so as to be movable in the direction of the axis. The outer diameter of the valve element 204 is larger than the inside diameters of the small-diameter portion 207 and the valve seat portion 203 formed in the housing 202. The valve element 204 is urged toward the valve seat portion 203 by a spring 206. The movement of the valve element 20 to the valve seat portion 203 side or the slave cylinder 66 side is restricted as a valve seat portion 203-side end surface of the valve element 204 contacts the valve seat portion 203. The valve element 204 has a penetration hole 208 that is concentric with the axis of the valve element 204. The axis of the penetration hole 208 and the axis of the housing 202 extend in the same direction. Besides, the valve element 204 is equipped with a hollow conical elastic valve 210 that has a proximal end portion that is fixed to an inner peripheral portion of a valve seat portion 203-side end portion of the valve element 204, and a distal end portion that is protruded from the proximal end portion to the valve seat portion 203 side or the slave cylinder 66 side. This elastic valve 210 is made of an elastic member of, for example, rubber or the like. When the working oil flows from the master cylinder 62 side (the CMC side in FIG. 16) to the slave cylinder 66 side (the CSC side in FIG. 16), the opening of the distal end portion of the elastic valve 210 expands approximately to the inside diameter of the penetration hole 208 as shown in FIG. 16. Besides, when the working oil flows from the slave cylinder 66 side to the master cylinder 62 side, the distal end portion of the elastic valve 210 closes as shown in FIG. 17. That is, the hardness of the elastic member is set so that the cross-sectional area of the oil passageway thereof becomes smaller when the working oil moves from the slave cylinder side to the master cylinder side than when the working oil moves from the master cylinder side to the slave cylinder side.

An annular gap is formed between an outer peripheral surface of the valve element 204 and an inner peripheral surface of the housing 202. When the oil pressure of the working oil on the master cylinder 62 side is higher than the oil pressure on the slave cylinder 66 side, the valve element 204 is kept in a state in which the valve element 204 contacts the valve seat portion 203 shown in FIG. 16 due to the oil pressure on the master cylinder 62 side. During the state shown in FIG. 16, the working oil moving from the master cylinder 62 side to the slave cylinder 66 side flows to the slave cylinder 66 side through the penetration hole 208 and the elastic valve 210 as shown by an arrow *a* in FIG. 16. On the other hand, when the oil pressure of the working oil on the slave cylinder 66 side is higher than the oil pressure on the master cylinder 62 side, the valve element 204 is kept in a state in which the valve element 204 is apart from the valve seat portion 203 as shown in FIG. 17. During the state shown in FIG. 17, the working oil moving from the slave cylinder 66 side to the master cylinder 62 side flows to the master cylinder 62 side through the gap between the outer peripheral surface of the valve element 204 and the inner peripheral surface of the housing 202 as shown by arrows *b* in FIG. 17.

As for the one-way throttle valve 200 constructed as described above, in the case where the pedal return operation of releasing depression of the clutch pedal 60 is performed, the working oil flows from the slave cylinder 66 side (the CSC side) to the master cylinder 62 side (the CMC side) as shown by the arrows in FIG. 17. However, when the clutch pedal 60 comes to a position immediately before the pedal 60 is completely released, the valve element 204 is brought into contact with the valve seat portion 203 of the housing 202 by the spring 206 as the oil pressure of the working oil weakens. At this time, the one-way throttle valve 200 temporarily cuts off the communication through the oil passageway of the one-way throttle valve 200. As shown in FIG. 11, negative pressure occurs immediately before the clutch pedal 60 is completely returned. Substantially simultaneously with the occurrence of negative pressure, the one-way throttle valve 200 cuts off the communication through the oil passageway. Due to this, the flow of the working oil is stopped at the timing of occurrence of negative pressure. Therefore, the occurrence of negative pressure can be suitably prevented.

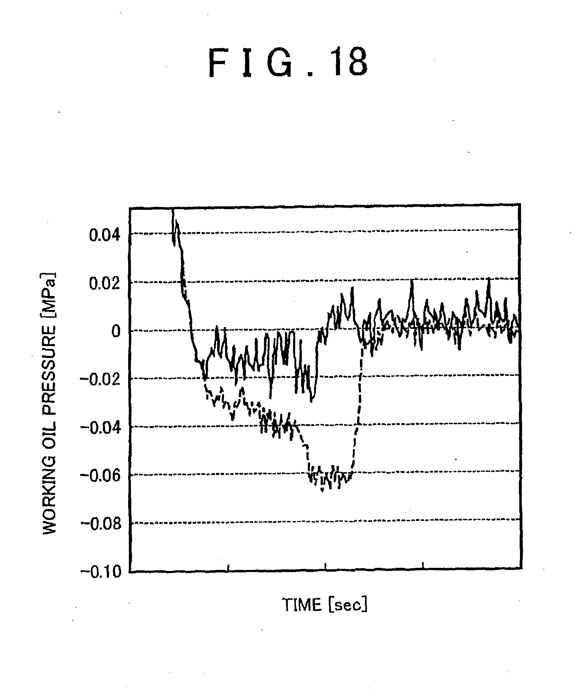

FIG. 18 is a diagram showing changes in the oil pressure of the working oil in the slave cylinder 66 when the clutch pedal 60 is quickly returned from a depressed state in the case where the one-way throttle valve 200 is provided and in the case where the one-way throttle valve is not provided. It is to be noted that FIG. 18 shows only changes in the oil pressure during a period from immediately before the clutch pedal 60 is completely returned to when the pedal is completely returned, that is, only a region where negative pressure occurs (corresponding to the period from the time point t3 to the time point t4 as shown in FIG 11). Besides, a solid line shows changes in the oil pressure in the case where the one-way throttle valve 200 is provided, and an interrupted line shows changes in the oil pressure in the case where the one-way throttle valve 200 is not provided. As shown in FIG. 18, in the case where the one-way throttle valve 200 is not provided, the negative pressure value becomes large immediately before the clutch pedal 60 is completely returned. On the other hand, in the case where the one-way throttle valve 200 is provided, the occurrence of negative pressure is prevented since at the timing of occurrence of negative pressure, the one-way throttle valve 200 stops the flowing of the working oil in the oil passageway. Incidentally, the elastic force of the spring 206 is adjusted beforehand so that the one-way throttle valve 200 is closed substantially simultaneously with the timing of occurrence of negative pressure. Therefore, when depression of the clutch pedal 60 is released, the one-way throttle valve 200 shuts off the flowing through the oil passageway only at the time point of occurrence of negative pressure, so that the occurrence of negative pressure is efficiently prevented. On the other hand, when the clutch pedal 60 is depressed, that is, when the working oil flows from the master cylinder 62 side to the slave cylinder 66 side, the one-way throttle valve 200 is opened, so that sufficient amount of flow of the working oil is secured. As can be understood from the foregoing description, due to the provision of the one-way throttle valve 200, the flowing through the oil passageway is cut off and negative pressure is restrained only at the time point of occurrence of negative pressure. Therefore, the increase of the pedal backlash can be effectively restrained.

As described above, according to this embodiment, the one-way throttle valve 200 is a valve mechanism that opens when the working oil moves from the master cylinder 62 side to the slave cylinder 66 side, and that closes when the working oil moves from the slave cylinder 66 side to the master cylinder 62 side and negative pressure occurs. Therefore, the occurrence of negative pressure can be effectively restrained as in the foregoing embodiment.

While the embodiments of the invention have described in detail with reference to the drawings, the invention is applicable also in other manners.

For example, although in the foregoing embodiments, the orifice 130 and the one-way throttle valve 200 are used as examples of the flow restraint device, this is not restrictive. The flow restraint device may have any construction as long as the device gives flow resistance when the working oil flows from the slave cylinder 66 side to the master cylinder 62.

Besides, although in the foregoing embodiments, the orifice 130 (the flow restraint device) is provided in the connecting portion 134 between the slave cylinder 66 and the piping 124, the orifice 130 may be provided at other locations, for example, in the vicinity of the outlet opening of the pressure chamber 114, or the like. That is, the position of the orifice 130 is not particularly limited as long as the position thereof is within the slave cylinder 66.

Incidentally, what have been described above are mere embodiments of the invention. The invention can be carried out in various manners with various alterations or improvements that are provided on the basis of knowledge of a person having ordinary skill in the art.

Preferably, the vehicle hydraulic clutch apparatus is used to connect and disconnect or cut off the motive power transmission path between the engine and a constant mesh parallel shaft-type manual transmission.

Besides, preferably, the oil passageway of the vehicle hydraulic clutch apparatus is provided with a breather for discharging air from the oil passageway.

Besides, preferably, the reservoir tank is linked to the oil passageway of the vehicle hydraulic clutch apparatus via the clutch master cylinder, so that the amount of the working oil in the oil passageway is adjusted as appropriate. For example, the volume of the working oil changes according to the temperature. For such changes in the volume associated with changes in the temperature, appropriate adjustment is performed by the working oil being suitably supplied from the reservoir tank into the oil passageway, or by the working oil flowing to the reservoir tank side, or the like. Besides, even in the case where the friction clutch has abraded, the amount of the working oil needed in the oil passageway changes in association with changes in the posture of the diaphragm spring that generates reaction force to the output piston of the concentric slave cylinder. For such changes, too, appropriate adjustment is performed by the reservoir tank. Incidentally, when the clutch pedal is depressed, the port provided in the clutch master cylinder which provides communication between the oil passageway which is provided in the clutch master cylinder and the reservoir tank is shut off, so that the working oil in the oil passageway is pressurized to generate a clutch working oil pressure.

**Claims**

1. A vehicle hydraulic clutch apparatus including: a clutch master cylinder which is connected to a reservoir tank that stores an working oil and which generates clutch working oil pressure in response to operation of a clutch pedal; and a concentric slave cylinder that engages and releases a friction clutch as clutch working oil pressure generated by the clutch master cylinder is supplied to and discharged from the concentric slave cylinder via an oil passageway, the vehicle hydraulic clutch apparatus comprising:

   a flow restraint device that restrains flow of the working oil from a concentric slave cylinder side to a clutch master cylinder side which occurs according to operation of the clutch pedal, and that is provided in the concentric slave cylinder (66);
   wherein
   the flow restraint device is a valve mechanism in which a valve (210) is moved so that a cross-sectional area of the oil passageway becomes smaller when the working oil moves from the concentric slave cylinder side to the clutch master cylinder side than when the working oil moves from the clutch master cylinder side to the concentric slave cylinder side;
   **characterised in that**
   the valve (210) is made of an elastic member,
   the elastic member has a conical shape; and
   a penetration hole concentric with an axis of the elastic member is formed in the elastic member.

2. The vehicle hydraulic clutch apparatus according to claim 1, wherein
   the valve mechanism opens the valve (210) when the working oil moves from the clutch master cylinder side to the concentric slave cylinder side, and closes the valve (210) when the working oil moves from the concentric slave cylinder side to the clutch master cylinder side and negative pressure occurs.

3. The vehicle hydraulic clutch apparatus according to claim 1 or claim 2, wherein
   the concentric slave cylinder (66) includes: a cylindrical inner sleeve fixed to a non-rotary member; a cylindrical outer sleeve that is fixed at an outer periphery side of the inner sleeve and coaxially with the inner sleeve; an annular pressure chamber that is formed between the inner sleeve and the outer sleeve and that receives the clutch working oil pressure from the clutch master cylinder (62); an annular output piston that is slidably fitted in a gap between the inner sleeve and the outer sleeve, and that receives the clutch working oil pressure supplied to the pressure chamber and transmits clutch operating force to the friction clutch; and a slidable cup that is interposed between the pressure chamber and the output piston and that liquid-tightly maintains the pressure chamber, and
   the output piston includes a first piston and a second piston that are separable from each other in a direction of an axis.

4. The vehicle hydraulic clutch apparatus according to claim 3, wherein
   the output piston consists of the first piston and the second piston.

5. The vehicle hydraulic clutch apparatus according to claim 1 or 2, wherein
   the flow restraint device is provided in a connecting portion that connects an opening portion of the oil passageway that communicates with a pressure chamber formed in the concentric slave cylinder (66) and a piping that constitutes the oil passageway that communicates with the clutch master cylinder (62).

6. The vehicle hydraulic clutch apparatus according to claim 5, wherein
   the flow restraint device is formed integrally with a cylindrical seat member that is inserted in the connecting portion between the concentric slave cylinder (66) and the piping.

**Patentansprüche**

1. Hydraulische Kupplungsvorrichtung für ein Kraftfahrzeug mit:

   einem Hauptzylinder, der mit einem Speichertank verbunden ist, der ein Arbeitsöl speichert, und der Arbeitsöldruck für die Kupplung als Antwort auf eine Betätigung des Kupplungspedals erzeugt; und einem konzentrischen Nehmerzylinder, der eine Reibkupplung in Eingriff nimmt und löst, sobald ein Arbeitsöldruck der Kupplung, der von dem Hauptzylinder erzeugt wird, zu dem konzentrischen Nehmerzylinder über einen Öldurchgang zugeführt und von diesem abgelassen wird, wobei die hydraulische Kupplungsvorrichtung des Fahrzeugs aufweist:

eine Strömungsbeschränkungseinrichtung, die einen Strom des Arbeitsöls von einer Seite des konzentrischen Nehmerzylinders zu einer Seite des Hauptzylinders, der gemäß einer Betätigung des Kupplungspedals auftritt, beschränkt und die in dem konzentrischen Nehmerzylinder (66) vorgesehen ist; wobei

die Strömungsbeschränkungseinrichtung ein Ventilmechanismus ist, in dem ein Ventil (210) so bewegt wird, dass eine Querschnittsfläche des Öldurchgangs kleiner wird, wenn sich das Arbeitsöl von der Seite des konzentrischen Nehmerzylinders zu der Seite des Hauptzylinders bewegt, als, wenn sich das Arbeitsöl von der Seite des Hauptzylinders zu der Seite des konzentrischen Nehmerzylinders bewegt;

**dadurch gekennzeichnet, dass**

das Ventil (210) aus einem elastischen Element hergestellt ist,

das elastische Element eine konische Form hat; und

ein Durchdringungsloch, das konzentrisch mit einer Achse des elastischen Elements ist, in dem Element ausgebildet ist.

2. Hydraulische Kupplungsvorrichtung eines Kraftfahrzeugs nach Anspruch 1, wobei

der Ventilmechanismus das Ventil (210) öffnet, wenn sich das Arbeitsöl von der Seite des Hauptzylinders zu der Seite des konzentrischen Nebenzylinders bewegt, und das Ventil (210) schließt, wenn sich das Arbeitsöl von der Seite des konzentrischen Nehmerzylinders zu der Seite des Hauptzylinders bewegt und Unterdruck entsteht.

3. Hydraulische Kupplungsvorrichtung eines Kraftfahrzeugs nach Anspruch 1 oder Anspruch 2, wobei

der konzentrische Nehmerzylinder (66) umfasst: eine zylindrische Innenhülle, die an einem nicht rotierenden Element fixiert ist; eine zylindrische Außenhülle, die an einer äußeren Umfangsseite der inneren Hülle fixiert und koaxial zu der inneren Hülle ist; eine ringförmige Druckkammer, die zwischen der inneren Hülle und der äußeren Hülle ausgebildet ist und die den Arbeitsöldruck der Kupplung von dem Hauptzylinder (62) empfängt; einen ringförmigen Ausgabekolben, der verschiebbar in einer Spalte zwischen der inneren Hülle und der äußeren Hülle eingepasst ist und der den Arbeitsöldruck der Kupplung empfängt, der zu der Druckkammer zugeführt wird, und der eine Kupplungsbetätigungskraft zu der Reibkupplung überträgt; sowie einen verschiebbaren Außenring, der zwischen der Druckkammer und dem Ausgabekolben gestellt ist und der die Druckkammer flüssigkeitsdicht hält, und

der Ausgabekolben einen ersten Kolben und einen zweiten Kolben umfasst, die in einer Richtung einer Achse voneinander trennbar sind.

4. Hydraulische Kupplungsvorrichtung eines Kraftfahrzeugs nach Anspruch 3, wobei

der Ausgabekolben aus dem ersten Kolben und dem zweiten Kolben besteht.

5. Hydraulische Kupplungsvorrichtung eines Kraftfahrzeugs nach Anspruch 1 oder 2, wobei

die Strömungsbeschränkungseinrichtung in einem Verbindungsabschnitt vorgesehen ist, der einen Öffnungsabschnitt des Öldurchgangs, der mit einer Druckkammer in Verbindung steht, die in dem konzentrischen Nehmerzylinder (66) ausgebildet ist, und eine Rohrleitung verbindet, die den Öldurchgang ausbildet, der mit dem Hauptzylinder (62) in Verbindung steht.

6. Hydraulische Kupplungsvorrichtung eines Fahrzeugs nach Anspruch 5, wobei

die Strömungsbeschränkungseinrichtung einstückig mit einem zylindrischen Sitzelement ausgebildet ist, das in den Verbindungsabschnitt zwischen dem konzentrischen Nehmerzylinder (66) und der Rohrleitung eingeführt ist.

**Revendications**

1. Appareil d'embrayage hydraulique de véhicule comprenant : un maître-cylindre d'embrayage relié à un bac de réservoir stockant une huile de travail et générant une pression d'huile de travail d'embrayage en réponse à l'actionnement d'une pédale d'embrayage ; et un vérin esclave concentrique engrenant et libérant un embrayage à friction lorsqu'une pression d'huile de travail d'embrayage générée par le maître-cylindre d'embrayage est amenée et refoulée du vérin esclave concentrique via un passage d'huile, l'appareil d'embrayage hydraulique de véhicule comprenant :

un dispositif limitateur de flux limitant le flux de l'huile de travail d'un côté de vérin esclave concentrique vers un côté de maître-cylindre d'embrayage se produisant en fonction de l'actionnement de la pédale d'embrayage et prévu dans le vérin esclave concentrique (66) ;

dans lequel :

le dispositif limitateur de flux est un mécanisme de vanne dans lequel une vanne (210) est déplacée de sorte qu'une aire en section transversale du passage d'huile se réduise davantage lorsque l'huile de travail se déplace du côté de vérin esclave concentrique vers le côté de maître-cylindre d'embrayage que lorsque l'huile de travail se déplace du côté de maître-cylindre d'embrayage vers le côté de vérin esclave concentrique ;

**caractérisé en ce que** :

la vanne (210) est fabriquée à partir d'un élément élastique ;

l'élément élastique ayant une forme conique ; et

qu'un trou pénétrant concentrique doté d'un axe de l'élément élastique est formé dans l'élément élastique.

**2.** Appareil d'embrayage hydraulique de véhicule selon la revendication 1, dans lequel le mécanisme de vanne ouvre la vanne (210) lorsque l'huile de travail se déplace du côté de maître-cylindre d'embrayage vers le côté de vérin esclave concentrique et ferme la vanne (210) lorsque l'huile de travail se déplace du côté de vérin esclave concentrique vers le côté de maître-cylindre d'embrayage et qu'une pression négative se produit.

**3.** Appareil d'embrayage hydraulique de véhicule selon la revendication 1 ou 2, dans lequel :

le vérin esclave concentrique (66) comprend : un manchon intérieur cylindrique fixé à un élément non rotatif ; un manchon extérieur cylindrique fixé au niveau d'un côté de périphérie extérieure du manchon intérieur et coaxialement avec le manchon intérieur ;

une chambre de pression annulaire formée entre le manchon intérieur et le manchon extérieur et recevant la pression d'huile de travail d'embrayage provenant du maître-cylindre d'embrayage (62) ; un piston de sortie annulaire ajusté de façon coulissante dans un interstice prévu entre le manchon intérieur et le manchon extérieur et recevant la pression d'huile de travail d'embrayage amenée à la chambre de pression et transmettant la force d'actionnement d'embrayage à l'embrayage à friction ; et une coupelle coulissante interposée entre la chambre de pression et le piston de sortie et maintenant la chambre de pression étanche sur le plan liquide ; et

le piston de sortie comprend un premier piston et un second piston pouvant être séparés l'un de l'autre dans une direction d'un axe.

**4.** Appareil d'embrayage hydraulique de véhicule selon la revendication 3, dans lequel le piston de sortie se compose du premier piston et du second piston.

**5.** Appareil d'embrayage hydraulique de véhicule selon la revendication 1 ou 2, dans lequel le dispositif limitateur de flux est prévu dans une partie de jonction reliant une partie d'ouverture du passage d'huile communiquant avec une chambre de pression formée dans le vérin esclave concentrique (66) et un tuyau constituant le passage d'huile communiquant avec le maître-cylindre d'embrayage (62).

**6.** Appareil d'embrayage hydraulique de véhicule selon la revendication 5, dans lequel le dispositif limitateur de flux est intégralement formé avec un élément de siège cylindrique inséré dans la partie de jonction prévue entre le vérin esclave concentrique (66) et le tuyau.

# FIG.1

# F I G . 2

# F I G . 3

# F I G . 4

# FIG.5

# FIG.6

# FIG.7

# FIG.8

# FIG.9

# FIG.10

# F I G . 11

# FIG.12

EP 2 610 518 B1

# F I G . 13

A -○- CSC SIDE
B -●- INTERMEDIATE
C -■- CMC SIDE
D -□- W/O ORIFICE

# F I G . 14

A -O- CSC SIDE
B -●- INTERMEDIATE
C -■- CMC SIDE
D -□- W/O ORIFICE

# F I G . 15

| | CSC–SIDE FLUID INERTIA ENERGY | NEGATIVE PRESSURE IN CSC | INCREASE IN PEDAL BACKLASH | LOW–TEMPERATURE RETURNING PERFORMANCE EFFECT |
|---|---|---|---|---|
| A: DISPOSED AT CSC SIDE | SMALL→ | SMALL→ | SMALL | POOR (SAME FOR A, B, C) ESTABLISHED AS VEHICLE A LIMIT EXISTS |
| B: INTERMEDIATE POSITION IN PIPING | INTERMEDIATE→ | INTERMEDIATE→ | INTERMEDIATE | |
| C: DISPOSED AT CMC SIDE | LARGE→ | LARGE→ | LARGE | |
| D: WITHOUT ORIFICE | MAXIMUM→ | MAXIMUM→ | PARTICULARLY LARGE | GOOD |

EP 2 610 518 B1

# F I G . 16

CSC SIDE    200

CMC SIDE

# F I G . 17

CSC SIDE

CMC SIDE

# FIG.18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008190718 A
- JP 2009030710 A

- DE 102008058674